# EUROPÄISCHE PATENTANMELDUNG

(11) **EP 4 212 254 A1**
(43) Veröffentlichungstag der Anmeldung: **19.07.2023**
(21) Anmeldenummer: 23159373.2
(22) Anmeldetag: 12.11.2019
(51) Int. Cl.: B05D 3/12, B05D 1/42, B05D 5/02, B05D 3/04, B08B 1/00, B08B 3/02, B08B 5/02, B08B 7/00, B08B 15/04, B05D 3/00, B24C 1/04, B24C 3/08, B24C 9/00, B05D 3/06

(54) **VERFAHREN UND VORRICHTUNG ZUR OBERFLÄCHENBEARBEITUNG**

(30) Priorität: 03.05.2019 DE 102019206431
(62) Teilanmeldung aus: 19208741.9
(71) Anmelder: Hymmen GmbH Maschinen- und Anlagenbau, 33613 Bielefeld (DE)
(72) Erfinder:
(74) Vertreter: Prüfer & Partner mbB Patentanwälte · Rechtsanwälte

(57) **Zusammenfassung**

Es wird ein Verfahren zum Bearbeiten einer Oberfläche (2) eines Werkstückes (1) offenbart. Daneben wird eine Vorrichtung zur Durchführung des Verfahrens offenbart.

## Beschreibung

Die vorliegende Erfindung bezieht sich auf ein Verfahren und eine Vorrichtung zum Bearbeiten einer Oberfläche eines Werkstückes, insbesondere zum Herstellen einer dekorativen Oberfläche.

Zur Herstellung von dekorativen Oberflächen im industriellen Maßstab, die beispielsweise die Nachbildung von Fliesen- oder Holzoberflächen zum Ziel haben, werden neben einer Schicht, die die spätere Oberfläche bildet, auch temporär weitere Manipulationsmittel aufgebracht, um die Oberfläche der Schicht zu manipulieren, so dass schließlich die dekorative Oberfläche erzeugt werden kann.

Die EP 3 109 056 A1 beschreibt beispielsweise ein Verfahren zum Herstellen einer Struktur auf einer Oberfläche. Dazu wird eine flüssige Schicht auf ein Werkstück aufgetragen. Anschließend wird ein Manipulationsmittel in Form von Tröpfchen auf die flüssige Schicht aufgespritzt, wobei durch die Tröpfchen eine Verdrängung der flüssigen Schicht stattfindet, so dass sich darin Vertiefungen bilden, die zusammen eine Struktur in der flüssigen Schicht bilden. Anschließend wird diese Schicht fixiert. Auf diese Weise kann eine Oberfläche auf der Schicht erzeugt werden, die beispielsweise eine Holz- oder Fliesenoptik aufweist.

Die EP 3 415 316 A1 offenbart ein Verfahren, bei dem ein Manipulationsmittel auf die flüssige Schicht in Form von Tröpfchen oder feinen Tröpfchen aufgebracht wird, wobei das Manipulationsmittel die Eigenschaft aufweist, elektromagnetische Strahlung zumindest teilweise zu absorbieren. Bei Bestrahlung der flüssigen Schicht beispielsweise mit einem Excimer-Laser erfolgt eine Polymerisation an der Oberfläche der flüssigen Schicht die dort eine Mikrofaltung bewirkt, die später eine matte Oberfläche zum Ergebnis hat. Das Manipulationsmittel auf der Oberfläche der flüssigen Schicht absorbiert dabei die Strahlung zumindest teilweise, so dass die Polymerisation hier weniger stark stattfindet. Diese Bereiche sind im Ergebnis glänzender als die Bereiche, auf denen sich kein Manipulationsmittel befand.

Bei den bekannten Verfahren muss nach der Durchführung des Verfahrens, insbesondere wenn die Schicht zumindest teilweise ausgehärtet ist, ein Teil der Schicht wieder entfernt werden, um die endgültig gewünschte Oberflächengestaltung zu erreichen. Dies muss, insbesondere bei der Herstellung in einer Produktionsstraße, schnell erfolgen, so dass ein hoher Produktionsdurchsatz erreicht werden kann. Ebenfalls müssen die bei der Entfernung von Teilen der Schicht genutzte Vorrichtung sowie das genutzte Verfahren industriell tauglich sein, d.h. es muss möglich sein, mit einer hohen Verfügbarkeit ohne zu großen manuellen Reinigungsaufwand produzieren zu können.

Es ist daher Aufgabe der vorliegenden Erfindung dieses Problem zu lösen.

Diese Aufgabe wird durch die Gegenstände der unabhängigen Ansprüche gelöst. Vorteilhafte Weiterbildungen sind Gegenstand der Unteransprüche.

Vorzugsweise ist ein Verfahren zum Entfernen von Teilen einer Schicht auf einer Oberfläche eines Werkstückes mit den folgenden Schritten vorgesehen:
- Herstellung eines mechanischen Kontaktes zwischen einem Kontaktelement und der Schicht auf der Oberfläche des Werkstückes zum Entfernen von Teilen der Schicht;
- physikalisches Trennen von entfernten Teilen der Schicht von den auf der Oberfläche des Werkstückes verbleibenden Teilen der Schicht.

Alternativ oder zusätzlich ist ein Verfahren zum Entfernen von Teilen einer Schicht auf einer Oberfläche eines Werkstückes mit den folgenden Schritten vorgesehen:
- Erzeugung eines Fluidstromes zum Entfernen von Teilen der Schicht;
- physikalisches Trennen von entfernten Teilen der Schicht von den auf der Oberfläche des Werkstückes verbleibenden Teilen der Schicht.

Der Fluidstrom trifft dabei bevorzugt in einem Winkel zwischen 1 ° und 90 ° auf die Schicht.

Vorzugsweise ist eine Kombination der in den beiden vorangegangenen Verfahren zu einem gesamten Verfahren vorgesehen, wobei jeder der Schritte des Verfahrens zumindest einmal ausgeführt wird.

Vorzugsweise weist die Schicht auf der Oberfläche des Werkstückes Härteunterschiede von mindestens einem Faktor 1,5, vorzugsweise mindestens einem Faktor 2, zwischen härteren Bereichen und den weniger harten Bereichen auf.

Als Härte der Schicht soll hier insbesondere die Ritzhärte oder die Kratzfestigkeit der Schicht verstanden werden. Solange diese bei einer möglichen Ausführungsform aufgrund von niedriger Viskosität der Schicht oder von Teilen der Schicht nicht oder nur schlecht messbar ist, kann alternativ unter der hier beschriebenen Härte auch der prozentuale Anteil von durch Polymerisation umgesetzten chemischen Bindungen verstanden werden.

Alternativ oder zusätzlich weist die Schicht auf der Oberfläche des Werkstückes Viskositätsunterschiede von mindestens einem Faktor 1,5, vorzugsweise mindestens einem Faktor 2, zwischen stärker viskosen Bereichen und den weniger stark viskosen Bereichen auf.

Vorzugsweise erfolgt das physikalische Trennen von den abgelösten Teilen der Schicht von den auf der Oberfläche des Werkstückes verbleibenden Teilen der Schicht durch Absaugen, Abwischen, Abblasen, oder durch eine Kombination dieser Schritte.

Vorzugsweise bewegen sich die Schicht, die sich auf der Oberfläche des Werkstückes befindet, und das Kontaktelement beim Entfernen von Teilen der Schicht relativ zueinander.

Vorzugsweise weist das Kontaktelement eine stehende und/oder eine bewegte Bürste und/oder ein Schleif- und/oder ein Hobelelement auf, wobei vorzugsweise die Bürste zumindest als bewegte Bürste eine Tellerbürste und/oder eine Walzenbürste und/oder ein Bürstenband und/oder als stehende Bürste einen Balken mit Bürstenbesatz aufweist, und/oder wobei das Kontaktelement, insbesondere die Bürste, Textil- und/oder Kunststofffasern, insbesondere Nylonfasern, Anderlon, und/oder Metall, insbesondere Stahl, Messing oder Kupfer als Borsten aufweist.

Vorzugsweise erfolgt gleichzeitig mit dem Herstellen des mechanischen Kontaktes zwischen dem Kontaktelement und der Schicht auf der Oberfläche und/oder gleichzeitig mit der Erzeugung des Fluidstromes auf die Schicht eine Bestrahlung der Schicht und/oder des Kontaktelementes und/oder der Umgebung des Kontaktelementes in der sich getrennte Teile der Schicht befinden. Die Bestrahlung erfolgt bevorzugt mit elektromagnetischer Strahlung.

Vorzugsweise wird das Kontaktelement während des physikalischen Trennens kontinuierlich gereinigt wird, wobei die Reinigung vorzugsweise durch Verwendung einer Kombination aus einer elektromagnetischen Strahlenquelle und/oder einer Absaugvorrichtung und/oder einer mechanischen Abschlagkante durchgeführt wird.

Vorzugsweise wird eine Düse, die zur Erzeugung des Fluidstroms ausgebildet ist, während des physikalischen Trennens kontinuierlich gereinigt, wobei die Reinigung vorzugsweise durch eine Kombination aus einer elektromagnetischen Strahlenquelle und/oder einer Absaugvorrichtung und/oder einer oder mehrere weitere Trocknungseinrichtungen oder Strahlenquellen durchgeführt wird. Dabei können die eine oder mehrere Trocknungseinrichtungen und/oder Strahlenquellen auch innerhalb der einen oder mehreren Absaugvorrichtung positioniert sein.

Vorzugsweise wird vor dem Herstellen des mechanischen Kontaktes zwischen dem Kontaktelement und der Schicht eine Reinigung der Oberfläche der Schicht durchgeführt. Alternativ oder zusätzlich wird nach dem physikalischen Trennen von Teilen der Schicht eine Reinigung der restlichen auf der Oberfläche des Werkstückes verbleibenden Schicht durchgeführt.

Vorzugsweise wird vor dem Erzeugen des Fluidstromes auf die Schicht eine Reinigung der Oberfläche durchgeführt. Alternativ oder zusätzlich wird nach dem physikalischen Trennen von Teilen der Schicht eine Reinigung der restlichen auf der Oberfläche des Werkstückes verbleibenden Schicht durchgeführt.

Vorzugsweise erfolgt die kontinuierliche Reinigung des Kontaktelementes, insbesondere der Bürste, durch eine Bestrahlung mit UV-Strahlung, bevorzugt mit einer Wellenlänge zwischen 180 und 400 nm, in Kombination mit einem Abstreifen von ausgehärteten Restbestandteilen aus den abgetrennten Teilen der Schicht an einer Abschlagkante und einer Absaugvorrichtung dieser Restbestandteile mit Hilfe einer Absaugvorrichtung.

Vorzugsweise erfolgt die kontinuierliche Reinigung der Düse durch eine Bestrahlung mit UV-Strahlung, bevorzugt mit einer Wellenlänge zwischen 180 und 400 nm, in Kombination mit einem Absaugen von Restbestandteilen aus den abgetrennten Teilen der Schicht mit Hilfe einer Absaugvorrichtung.

Vorzugsweise wird zur Reinigung der Oberfläche der Schicht ein Reinigungsmittel auf die Schicht aufgetragen, das vorzugsweise anschließend, besonders bevorzugt mit Hilfe eines Abstreifers und/oder einer Absaugvorrichtung, wieder entfernt wird. Das Reinigungsmittel ist bevorzugt flüssig bis pastös. Es ist dazu ausgebildet, Rückstände und Verschmutzung auf der Oberfläche der Schicht 2 einzuschließen, wobei anschließend eine Entfernung des Reinigungsmittels mit den eingeschlossenen Rückständen und Verschmutzungen erfolgen kann.

Neben der reinen Bearbeitung der Schicht auf dem Werkstück kann auch vorgesehen sein, dass ein Manipulationsmittel eingesetzt wird.

Vorzugsweise ist ein Verfahren zum Herstellen einer dekorativen Oberfläche auf einem Werkstück mit folgenden Schritten vorgesehen:
- Aufbringen eines Manipulationsmittels zumindest auf und/oder in einen Teil einer flüssigen Schicht die sich auf dem Werkstück befindet und/oder zumindest auf einen Teil des Werkstückes;
- Entfernen von Teilen der Schicht, wobei
das Entfernen mechanisch und/oder berührungslos, insbesondere fluidisch, erfolgt.

Es wird somit ein Manipulationsmittel auf und/oder in eine zumindest teilweise flüssige Schicht aufgebracht, die sich auf einem Werkstück befindet. Das Manipulationsmittel kann alternativ oder zusätzlich auch auf das Werkstück selbst aufgetragen werden. Das Aufbringen des Manipulationsmittels erfolgt dabei bevorzugt auf Teilflächen oder Teilbereiche der flüssigen Schicht und/oder des Werkstückes. Im weiteren Verlauf des Verfahrens werden Teile der Schicht entfernt. Die Entfernung erfolgt bevorzugt mechanisch und/oder berührungslos, insbesondere fluidisch. Wird das Manipulationsmittel direkt auf das Werkstück aufgebracht, so wird bevorzugt anschließend die flüssige Schicht aufgebracht, wie weiter unten beschrieben. Vorzugsweise wird die Schicht, bevor das Entfernen von Teilen der Schicht durchgeführt wird, zusammen mit dem Manipulationsmittel getrocknet und/oder zumindest teilweise ausgehärtet, so dass insbesondere die Viskosität der Schicht zunimmt.

Diese Verfahrensschritte können in einem Verfahren zur Herstellung einer dekorativen Oberfläche auf einem Werkstück vorgesehen sein. Zwischen der Durchführung des Entfernens von Teilen der Schicht und den zuvor durchgeführten Verfahrensschritten kann jedoch auch eine zeitliche Pause liegen, so dass es sich, insbesondere bei dem Entfernen von Teilen der Schicht, auch um ein eigenständiges Verfahren handeln kann.

Vorzugsweise umfassen die Teile der Schicht, die entfernt werden, auch Teile des sich auf oder in der Schicht befindlichen Manipulationsmittels. In einer speziellen Ausführungsform handelt es sich dabei ausschließlich um das Manipulationsmittel. Wird das Manipulationsmittel von der Schicht entfernt, so kann dies teilweise erfolgen, so dass ein Rest des Manipulationsmittels auf und/oder in der Schicht zurückbleibt.

Das Entfernen kann jedoch auch vollständig erfolgen, dass das Manipulationsmittel restlos entfernt wird.

Somit kann das Entfernen von Teilen der Schicht, bedeuten, dass Material der Schicht selbst entfernt wird. Alternativ kann auch ausschließlich das Manipulationsmittel von der Schicht entfernt werden. Es kann jedoch auch beides, also Material der Schicht selbst und Material des Manipulationsmittels entfernt werden.

Vorzugsweise erfolgt das mechanische Entfernen von Teilen der Schicht mit einer Entfernungsvorrichtung, die ein Kontaktelement aufweist, das mit der Oberfläche der Schicht in Kontakt steht, wobei sich die Oberfläche der Schicht und das Kontaktelement beim Entfernen relativ zueinander bewegen. Neben einer gegenläufigen Bewegung kann auch eine gleichläufige Bewegung oder eine anders ausgebildete Relativbewegung stattfinden.

Vorzugsweise weist das Kontaktelement eine stehende und/oder eine bewegte Bürste und/oder ein Schleif- und/oder ein Hobelelement auf, wobei das Kontaktelement bewegt oder stehend gegenüber dem Werkstück vorgesehen ist. Vorzugsweise weist die Bürste zumindest als bewegte Bürste eine Tellerbürste und/oder eine Walzenbürste und/oder ein Bürstenband und/oder als stehende Bürste einen Balken mit Bürstenbesatz auf.

Das Schleif- und/oder Hobelelement ist vorzugsweise dazu ausgebildet, Teile der Schicht wieder abzutragen, um darin eingeschlossenes Manipulationsmittel freizulegen. Anschließend kann das Manipulationsmittel mittels des Schleif- und/oder Hobelelements oder mittels anderer hier beschriebener Verfahren entfernt werden. Das Schleifelement kann bevorzugt einen Bandschleifer umfassen.

Allgemein kann das Kontaktelement ein stehendes und/oder ein bewegtes Element aufweisen. Das Kontaktelement ist weiter bevorzugt als zyklisch arbeitendes Kontaktelement ausgebildet, das beispielsweise ein Schleifband oder eine Walzenbürste aufweist. Dadurch weist das Kontaktelement vorteilhafterweise Abschnitte auf, die während des Entfernens zyklisch nicht mit der Schicht in Kontakt stehen. Diese Abschnitte können in diesem Moment gereinigt werden, wie weiter unten beschrieben wird.

Vorzugsweise weist das Kontaktelement, insbesondere die Bürste, Textil- und/oder Kunststofffasern, insbesondere Nylonfasern, und/oder Metall, insbesondere Stahl, Messing oder Kupfer auf. Darüber hinaus können auch Fasern zum Einsatz kommen, die ein Schleifmittel enthalten. Dabei handelt es sich vorzugsweise um Fasern mit Anderlon. Diese Fasern oder Materialien sind bevorzugt in den Borsten der Bürste enthalten. Somit sind insbesondere Ausbildungen der Bürste mit Metall- oder Kunststoffborsten möglich.

Die Bürste weist vorzugsweise Borsten auf, die einen Durchmesser von 0,05 bis 2 mm, vorzugsweise 0,1 bis 1,2 mm, weiter vorzugsweise 0,2 bis 0,7 mm, besonders bevorzugt 0,2 bis 0,3 mm, aufweisen.

Vorzugsweise umfasst das Entfernen von Teilen der Schicht eine Absaugung der Teile durch Unterdruck, vorzugsweise mittels einer Absaugvorrichtung, und/oder eine Erwärmung der Schicht und/oder des Manipulationsmittels, vorzugsweise mittels Zuführung von Wärme, besonders bevorzugt zur zumindest teilweisen Verflüssigung der Teile der Schicht, insbesondere des Manipulationsmittels. Die Wärmezuführung kann bevorzugt durch eine Heizung oder einen IR-Strahler erfolgen.

Vorzugsweise erfolgt eine gesteuerte und/oder geregelte Bewegung des Kontaktelementes. Dies kann beispielsweise die Positionierung des Kontaktelementes relativ zu der Schicht sein, oder auch eine Einstellung der Drehzahl bzw. der Umlaufgeschwindigkeit, der Tellerbürsten bzw. des Bürstenbandes.

Während das Kontaktelement Teile der Schicht entfernt, kann ein Zusetzen des Kontaktelements durch das entfernte Material der Schicht und/oder des Manipulationsmittels eintreten. Bei einer Bürste bedeutet dies, dass sich das entfernte Material in den Borsten festsetzt. Auch ein Schleif- und/oder ein Hobelelement kann unter Umständen von dem Zusetzen betroffen sein. Daher kann ein weiterer Schritt vorgesehen sein, in dem eine Reinigung des Kontaktelements durchgeführt wird. Das gesamte Verfahren zur Reinigung des Kontaktelements, das nachfolgend beschrieben wird, kann auch unabhängig von dem in dieser Anmeldung beschriebenen Verfahren betrieben werden.

Die Reinigung kann vorzugsweise durch mechanisches Abstreifen des Materials an einer Abstreifkante erfolgen, und/oder auch mittels Absaugung durch Unterdruck, beispielsweise durch die oben genannte oder eine weitere Absaugvorrichtung.

Um die Viskosität des Materials und/oder des Manipulationsmittels zu verringern und so die Lösbarkeit von dem Kontaktelement zu verbessern, kann auch hier eine Zuführung von Wärme an das Kontaktelement vorgesehen sein. Die Wärmezuführung kann bevorzugt durch eine Heizung oder einen IR-Strahler erfolgen. Die Heizung kann beispielsweise in dem Kontaktelement vorgesehen sein.

Alternativ oder zusätzlich kann die Reinigung des Kontaktelementes umfassen, dass das Kontaktelement während des Entfernens des Manipulationsmittels und/oder von Teilen der zuvor aufgetragenen Schicht mit Strahlung, insbesondere elektromagnetischer Strahlung und/oder Elektronenstrahlung, bestrahlt wird. Dadurch wird insbesondere erreicht, dass das Material, das sich an dem Kontaktelement festgesetzt hatte, mindestens teilweise oder vollständig ausgehärtet wird, und dann in einer harten und spröden Form vorliegt. Vorzugsweise wird durch die Aushärtung des Materials erreicht, dass sich dieses leicht von dem Kontaktelement, insbesondere von den Borsten falls eine Bürste vorgesehen ist, löst. Durch mechanisches Abstreifen und/oder Absaugen kann dieses Material wieder von dem Kontaktelement entfernt werden.

Zum mechanischen Abstreifen kann beispielsweise eine Abstreifkante vorgesehen sein, an der das zugesetzte Kontaktelement vorbeigeführt werden kann, wodurch das Manipulationsmittel und/oder der entfernte Teil der Schicht abgestreift werden können. Weist das Kontaktelement beispielsweise eine Bürste auf, so können hierzu die Borsten der Bürste mit der Abstreifkante in Kontakt treten.

Neben der Strahlungshärtung können auch weitere Härtungsmethoden eingesetzt werden, um das Material, das das Kontaktelement zugesetzt hat, auszuhärten.

Allgemein können unterschiedliche Methoden eingesetzt werden, um insbesondere die Viskosität und/oder die Härte des Materials, das das Kontaktelement zusetzt, zu beeinflussen. Bei zyklisch arbeitenden Kontaktelementen ist es wichtig, dass das Entfernen von Teilen der Schicht sowie die Reinigung des Kontaktelements, also das Entfernen dieser Teile der Schicht von dem Kontaktelement, innerhalb eines Zyklus' ablaufen. Folglich muss auch die Beeinflussung der Viskosität, sofern sie im Verfahren durchgeführt wird, innerhalb dieses Zyklus' ablaufen. Da es sich bei dem Material, das das Kontaktelement zusetzt insbesondere um Material der Schicht und/oder des Manipulationsmittels handelt, kann daher grundsätzlich jedes Verfahren eingesetzt werden, das insbesondere ein Aushärten bzw. eine Änderung der Viskosität dieser Materialien bewirkt. Daher wird hierzu auf die in dieser Anmeldung beschriebenen Möglichkeiten verwiesen.

In einer bevorzugten Ausführungsform weist das Material und/oder das Manipulationsmittel einen Anteil von mehr als 70% von Acrylaten, die sich durch Bestrahlung mit elektromagnetischer Strahlung über die Bildung von chemischen Bindungen vernetzen, und so die Viskosität und damit auch die Klebrigkeit des Materials und/oder des Manipulationsmittels verringern, und die Sprödigkeit erhöhen. Daher ist die oben beschriebene Ausführungsform der Reinigung des Kontaktelements gut geeignet, um einen dauerhaften und wenig störanfälligen Betrieb einer nach dem erfindungsgemäßen Verfahren produzierenden industriellen Anlage zu gewährleisten.

In anderen Ausführungsformen kann das Material und/oder das Manipulationsmittel auch andere Bestandteile aufweisen oder daraus ausgebildet sein, wie beispielsweise eine wässrige Mischung mit Bindemitteln, Pigmenten und anderen Additiven.

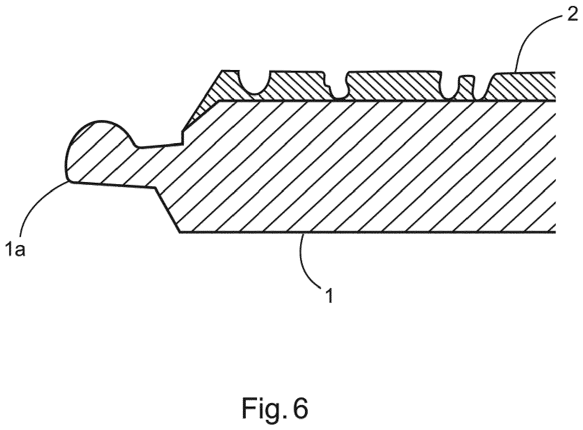

Vorzugsweise umfasst das Entfernen von Teilen der Schicht ein Beströmen der Oberfläche der Schicht und/oder des Manipulationsmittels mit einem Fluidstrom, insbesondere mit einem Luftstrom. Auf diese Weise kann insbesondere das Manipulationsmittel berührungslos entfernt werden, was vorteilhafterweise schonend für die Oberfläche der Schicht ist. So können auch Werkstücke verarbeitet werden, die Elemente aufweisen, die durch nicht berührungslose Verfahren, beispielsweise durch den Kontakt mit einer oben beschriebenen Bürste, beschädigt werden können. Zur Verdeutlichung ist in Fig. 6 eine Ausführungsform eines solchen Werkstückes gezeigt. Hier ist ein Werkstück 1 in Form einer vorgefrästen Diele mit einer auf die Werkstückoberfläche aufgetragenen Schicht 2 gezeigt. Nach links weist das Werkstück 1 ein Verbindungselement 1a auf, das hier als Feder im Sinne einer Nut-Feder-Verbindung in eine Nut eines weiteren Werkstückes eingreifen kann, um so mehrere Werkstücke beispielsweise als Bodenbelag aneinanderzufügen. Nach dem Stand der Technik werden anstelle von Nut und Feder heute auch sogenannte "Klickprofile" für die Verlegung von Fußbodendielenverwendet, welche z.B. in der EP 2 280 130 A2 dargestellt sind. Diese Bereiche, bzw. auch der Übergangsbereich von dem Verbindungselement hin zu der Schicht 2, sollten möglichst nicht unnötig während der Fertigung mechanisch beansprucht werden. Daher ist hier ein berührungsloses Entfernen von Teilen der Schicht besonders vorteilhaft.

Des Weiteren kann das Verfahren vorzugsweise auch für Oberflächen außerhalb des Fußbodenbelages, z.B. für Möbel-, Wand-, Deckenoberflächen oder auch für Außenfassadenelemente oder weitere Anwendungen genutzt werden.

Vorzugsweise trifft der Fluidstrom entsprechend ausgeformt auf die Oberfläche der Schicht und/oder des Manipulationsmittels, so dass er sich über die gesamte Breite der Schicht erstreckt. Die Länge der Erstreckung der Auftrefffläche des Fluidstroms in Bewegungsrichtung des Werkstückes liegt vorzugsweise bei 1% bis 20%, besonders bevorzugt bei 5% bis 15%, insbesondere bei 10% bis 12%, der Länge der Erstreckung des Fluidstroms quer zur Bewegungsrichtung. Somit wird bevorzugt ein möglichst dünner Fluidstrom insbesondere im Sinne einer "Luftklinge" bzw. eines "Luftmessers" verwendet. Alternativ kann als Fluidstrom auch ein Flüssigkeitsstrom, insbesondere enthaltend Wasser, verwendet werden.

Vorzugsweise trifft der Fluidstrom unter einem Winkel auf die Schicht und/oder auf das Manipulationsmittels, der geringer als 45°, vorzugsweise geringer als 30°, besonders bevorzugt geringer als 15°, ist. Insbesondere bei lediglich auf die Oberfläche der Schicht aufgetragenem Manipulationsmittel ist eine flache Anströmung sinnvoll um eine Ablösung von der Schicht zu erreichen, sollte beispielsweise nur das Manipulationsmittel werden sollen. Je nach Situation kann jedoch auch eine steilere Anstellung des Fluidstroms sinnvoll sein, um beispielsweise Manipulationsmittel, das in Vertiefungen der Schicht enthalten ist, auszublasen. Bevorzugt wird der Winkel während der Durchführung des Verfahrens verändert, besonders bevorzugt periodisch verändert. Die Veränderung kann vorzugsweise auch in Abhängigkeit der aktuell erfassten Menge des entfernten Manipulationsmittels erfolgen. Diese Menge wird vorzugsweise durch eine Erfassungseinrichtung erfasst, die beispielsweise das Gewicht des Manipulationsmittels erfasst, das entfernt wurde.

Alternativ oder zusätzlich kann der Fluidstrom auch durch sogenannte Rotationsdüsen auf die Oberfläche der Schicht auftreffen. Dabei rotieren die Rotationsdüsen, welche den Fluidstrom auf die Oberfläche leiten, um eine mittlere Achse, bei einem gesamten Durchmesser der rotierenden Düsen von vorzugsweise 2-120 mm, besonders bevorzugt 5-50 mm. Dadurch wird ein zeitlich variabler Fluidstrom auf die Oberfläche gelenkt.

Bevorzugt enthält der Fluidstrom ferner Festkörper, die die Entfernung von Teilen der Schicht verbessern. Beispielsweise kann hier Sand oder eine vergleichbare Substanz enthalten sein, die zusätzlich neben dem Fluidstrom auf die Oberfläche der Schicht und/oder des Manipulationsmittels wirkt. Der Fluidstrom kann insbesondere dadurch auch dazu verwendet werden, um neben dem Manipulationsmittel auch Material der Schicht abzutragen.

Die Festkörper weisen vorzugsweise einen Durchmesser von 0,0001 bis 1 mm, bevorzugt 0,001 bis 0,5 mm, besonders bevorzugt 0,005 bis 0,3 mm auf.

Alternativ oder zusätzlich sind die Festkörper dazu ausgebildet, sich nach dem Auftreffen auf die Schicht und/oder auf das Manipulationsmittel zu verflüssigen oder zu verdampfen. Dies kann beispielsweise dadurch erreicht werden, dass die Festkörper die Eigenschaft aufweisen, bei der Umgebungstemperatur, der das Werkstück mit der Schicht ausgesetzt ist, zu verdampfen. Beispielsweise kann dies durch Festkörper aus Trockeneis erreicht werden. Diese können insbesondere durch einen Trockeneis-Strahler auf die Oberfläche der Schicht und/oder des Manipulationsmittels aufgebracht werden. So wird vorteilhafterweise erreicht, dass die Festkörper nicht auf und/oder in der Schicht zurückbleiben. Somit kann auf eine anschließende Entfernung der Festkörper von der Schicht verzichtet werden.

Alternativ oder zusätzlich kann vorgesehen sein, dass die Festkörper während der Erzeugung des Fluidstroms mit einer Flüssigkeit, insbesondere mit Wasser, beaufschlagt werden. Dadurch wird erreicht, dass eine Erhöhung der Masse der Festkörper erfolgt, so dass die Wirkung auf die Oberfläche der Schicht und/oder des Manipulationsmittels erhöht wird. Die Beaufschlagung kann beispielsweise dadurch erfolgen, dass die Festkörper mit dem Fluidstrom durch einen Nebel der Flüssigkeit bewegt werden. Dadurch wirken die Festkörper als Kondensationskeime an denen Bestandteile des Nebels anhaften, wodurch schließlich die Beaufschlagung des Festkörpers mit der Flüssigkeit erfolgt.

Die Festkörper können speziell Sandkörner, Trockeneis (festes CO2), Wassereis (gefrorenes Wasser), Natriumbicarbonat, oder Mischungen aus diesen genannten Festkörpern aufweisen.

Vorzugsweise weist das Verfahren ferner zumindest einen der folgenden Schritte auf:
- Aufbringen einer flüssigen Schicht zumindest auf einen Teil einer Oberfläche des Werkstückes und/oder auf ein auf die Oberfläche des Werkstückes aufgebrachtes Manipulationsm ittel;
- Aushärten der Schicht und/oder des Manipulationsmittels zumindest bis zur teilweisen Aushärtung.

In einer speziellen Ausführungsform liegt ein Verfahren vor, das diesen Ablauf aufweist:
- Aufbringen einer flüssigen Schicht zumindest auf einen Teil einer Oberfläche des Werkstückes und/oder auf ein auf die Oberfläche des Werkstückes aufgebrachtes Manipulationsm ittel;
- Aufbringen des Manipulationsmittels zumindest auf einen Teil der flüssigen Schicht und/oder in die flüssige Schicht und/oder zumindest auf einen Teil des Werkstückes;
- Aushärten der Schicht und/oder des Manipulationsmittels zumindest bis zur teilweisen Aushärtung;
- Entfernen des Manipulationsmittels, wie oben beschrieben.

Die Schicht und/oder das Manipulationsmittel sind vorzugsweise mittels elektromagnetischer Strahlung polymerisierbar ausgebildet.

In einer weiteren speziellen Ausführungsform liegt ein Verfahren vor, das folgenden Ablauf aufweist:
- Aufbringen einer flüssigen Schicht zumindest auf einen Teil einer Oberfläche des Werkstückes;
- Aufbringen des Manipulationsmittels zumindest auf einen Teil der flüssigen Schicht und/oder in die flüssige Schicht;
- Aushärten der Schicht und/oder des Manipulationsmittels zumindest bis zur teilweisen Aushärtung;
- Entfernen von Teilen der Schicht, wie oben beschrieben.

Bei dieser zuletzt genannten Ausführungsform kann das aufgebrachte Manipulationsmittel auch vollständig oder teilweise mit dem letzten Schritt (Entfernen von Teilen der Schicht) gemeinsam mit entfernt werden.

Bei jeder denkbaren Ausführungsform des Verfahrens, insbesondere bei den beiden eben beschriebenen speziellen Ausführungsformen, können weitere Verfahrensschritte vorgesehen sein, die sowohl vor, zwischen als auch nach den bisher beschriebenen Verfahrensschritten vorgesehen sein können. Zudem können auch einzelne Verfahrensschritte wiederholt werden.

Vorzugsweise weist das Manipulationsmittel Wasser auf. Das Manipulationsmittel besteht in einer speziellen Ausführungsform ausschließlich aus Wasser.

Bevorzugt weist die Schicht und/oder das Manipulationsmittel acrylathaltiges Material auf.

Das Werkstück wird vorzugsweise bei der Durchführung des Verfahrens in einer Bewegungsrichtung bewegt und so nacheinander Elementen einer Vorrichtung zugeführt, die zur Ausführung der einzelnen Verfahrensschritte ausgebildet sind. Alternativ oder zusätzlich kann auch vorgesehen sein, dass sich die Elemente der Vorrichtung im Verhältnis zu dem Werkstück bewegen.

Das Verfahren kann beispielsweise so durchgeführt werden, dass die Schicht in flüssiger Form auf die Oberfläche des Werkstückes aufgebracht wird. Anschließend wird das Manipulationsmittel auf und/oder in die Schicht aufgebracht. Das Verfahren kann jedoch auch so ausgebildet sein, dass zunächst das Manipulationsmittel auf die Oberfläche des Werkstückes aufgebracht wird. Anschließend erfolgt dann ein Aufbringen der Schicht. Das Manipulationsmittel fungiert hier vorzugsweise als Platzhalter, so dass Bereiche der Oberfläche des Werkstückes nicht mit der Schicht in Kontakt kommen. Wird das Manipulationsmittel entfernt, nachdem die Schicht ausgehärtet wurde, verbleiben diese Stellen als Vertiefungen bzw. Aussparungen in der Schicht. Natürlich sind auch Ausführungsformen denkbar, bei denen sowohl ein Aufbringen des Manipulationsmittels vor als auch nach dem Auftrag der Schicht erfolgt. Auch ist ein mehrmaliges Wiederholen des Aufbringens der Schicht und/oder des Manipulationsmittels möglich. Wird das Manipulationsmittel als Platzhalter eingesetzt, so wird das Manipulationsmittel bevorzugt vor Aufbringen der flüssigen Schicht ausgehärtet.

Vor dem Ausbringen des Manipulationsmittels kann eine Trocknung oder Aushärtung der flüssigen Schicht, vorzugsweise mit elektromagnetischer Strahlung mit einer Wellenlänge von 200 bis 400 nm, erfolgen, um insbesondere die Viskosität der flüssigen Schicht zu beeinflussen.

Vorzugsweise wird nach dem Aufbringen der flüssigen Schicht das Manipulationsmittel auf Teile der flüssigen Schicht aufgebracht.

Vorzugsweise werden, insbesondere zur Aushärtung, das Manipulationsmittel und die zumindest teilweise flüssige Schicht mit elektromagnetischer Strahlung, bevorzugt mit einer Wellenlänge von 180 bis 400 nm, bestrahlt.

Das Aushärten kann darüber hinaus ebenso mehrmals durchgeführt werden. Es kann beispielsweise ein erstes Aushärten der Schicht zumindest bis zur teilweisen Aushärtung durchgeführt werden, bevor das Manipulationsmittel aufgebracht wird. Auf diese Weise kann gezielt eine gewünschte Viskosität der Schicht eingestellt werden, so dass beispielsweise eine Struktur, die durch den Auftrag des Manipulationsmittels entsteht, für eine gewünschte Zeit Bestand hat, bevor die Struktur wieder zerläuft.

Vorzugsweise beinhaltet das Aushärten eine Bestrahlung der Schicht und/oder des Manipulationsmittels mit elektromagnetischer Strahlung, vorzugsweise mit UV-Strahlung, und/oder eine Bestrahlung mit Elektronenstrahlung.

Das Aushärten kann bevorzugt zeitgleich mit dem Entfernen von Teilen der Schicht erfolgen. Beispielsweise kann die Stelle der Schicht, die gerade mit dem Kontaktelement in Kontakt steht gleichzeitig mit UV-Strahlung bestrahlt werden, die die Aushärtung bewirkt. Gleiches gilt für alle mechanischen oder berührungslosen Entfernungsmöglichkeiten, wie oben beschrieben.

Das Manipulationsmittel, das Teile der Schicht abdeckt, kann bewirken, dass der abgedeckte Teil der Schicht bei der Aushärtung nicht in demselben Maße aushärtet wie freiliegende Teile. Dabei kann es sich insbesondere um die hier beschriebenen Methoden zur Aushärtung handeln. Nach dem Entfernen von Teilen der Schicht wird dann bevorzugt eine abschließende Härtung der verbleibenden Schicht und/oder des verbleibenden Manipulationsmittels durchgeführt.

Alternativ oder zusätzlich beinhaltet das Aushärten aktive und/oder passive Trocknung. Unter aktiver Trocknung wird im Weiteren jede Art von Trocknung verstanden, bei der die flüssige Schicht durch Schaffung von speziellen Bedingungen getrocknet wird. So kann die flüssige Schicht und/oder das Manipulationsmittel insbesondere mittels Anströmung mit einem Fluid, insbesondere mit Luft, und/oder durch Zuführung von Wärme, insbesondere mittels IR-Strahlung oder durch Verwendung einer Heizung, getrocknet werden. Passive Trocknung ist hingegen vorzugsweise dadurch gekennzeichnet, dass die flüssige Schicht und/oder das Manipulationsmittel alleine und ohne weitere Bearbeitung aushärtet. Dies kann beispielsweise durch Transport des Werkstücks auf einem freien Streckenabschnitt eines Bandtransports erfolgen, und/oder durch Ablegen des Werkstücks.

Vorzugsweise erfolgt das Aushärten mittels Reaktionsaushärtung durch beispielsweise ein Zwei-Komponentensystem, welches durch chemische Reaktion zwischen den Komponenten der Schicht und/oder des Manipulationsmittels innerhalb von weniger als 30 Minuten, bevorzugt weniger als 5 Minuten aushärtet.

Vorzugsweise wird die Schicht nach dem Aufbringen des Manipulationsmittels dergestalt ausgehärtet, dass sich die Viskosität der Stellen der Schicht an denen das Manipulationsmittel aufgebracht war von der Viskosität der Stellen an denen das Manipulationsmittel nicht aufgebracht war unterscheidet. Der Unterschied entspricht vorzugsweise mindestens einem Faktor 1,5, besonders bevorzugt mindestens einem Faktor 2. Vorzugsweise ist die Viskosität dabei an Stellen an denen das Manipulationsmittel aufgebracht war geringer als an Stellen an denen das Manipulationsmittel nicht aufgebracht war. Dies ist im Falle von Strahlungshärtung dadurch zu begründen, dass die Schicht unterhalb des Manipulationsmittels zumindest teilweise von der Strahlung abgeschirmt wurde, wodurch die Schicht hier einem geringeren Maß an Strahlung ausgesetzt war und somit weniger stark aushärtete.

Vorzugsweise wird das Aushärten der Schicht nach dem Entfernen von Teilen der Schicht bis zur Endhärtung der Schicht durchgeführt.

Vorzugsweise wird die Schicht vor dem Aufbringen des Manipulationsmittels zumindest teilweise ausgehärtet. Wurde das Manipulationsmittel vor der flüssigen Schicht aufgebracht, so kann auch das Manipulationsmittel zumindest teilweise ausgehärtet werden, wobei dazu jeweils vorzugsweise elektromagnetische Strahlung, insbesondere UV-Strahlung, verwendet wird. Das Aushärten wird dabei bevorzugt wie oben beschrieben durchgeführt.

Vorzugsweise erfolgt das Aufbringen der flüssigen Schicht auf das Werkstück mit einem digitalen und/oder analogen Verfahren. Besonders bevorzugt erfolgt der Auftrag der flüssigen Schicht auf die gesamte Oberfläche des Werkstückes. Bei einem analogen Verfahren kann das Aufbringen mittels einer Auftragswalze oder einer Gießmaschine, die einen flüssigen Vorhang aus dem Material der Schicht erzeugt, durch den das Werkstück bewegt wird, erfolgen. Eine Auftragswalze und eine Gießmaschine haben den Vorteil, dass die Schicht mit relativ wenig Aufwand auf eine möglichst breite Fläche des Werkstückes aufgebracht werden kann. Bei einem digitalen Verfahren erfolgt das Aufbringen mittels digitaler Drucktechnik, beispielsweise mit einem Digitaldruckkopf oder Digitaldüsenbalken. Dadurch kann die Schicht auch nur auf Teilbereiche des Werkstückes aufgebracht werden.

Vorzugsweise erfolgt das Aufbringen des Manipulationsmittels auf das Werkstück und/oder auf die flüssige Schicht mit einem digitalen Verfahren. Dafür wird digitale Drucktechnik, beispielsweise mit einem Digitaldruckkopf oder Digitaldüsenbalken, eingesetzt. Dadurch kann das aufzubringende Manipulationsmittel besonders sparsam und präzise eingesetzt werden. Es ist jedoch auch analoge Technik, wie beispielsweise eine Gießvorrichtung denkbar.

Vorzugsweise umfasst das Aufbringen des Manipulationsmittels ein Aufbringen des Manipulationsmittels in Form von Tröpfchen und/oder in Form von feinen Tröpfchen. Das Aufbringen des Manipulationsmittels in Form von Tröpfchen auf die Schicht erfolgt vorzugsweise derart, dass die Tröpfchengeschwindigkeit und/oder das Tröpfchenvolumen so gesteuert werden, dass durch die Tröpfchen Vertiefungen in die Schicht eingebracht werden, wobei die Vertiefungen vorzugsweise eine Tiefe von vorzugsweise 2 µm bis 100 µm, besonders bevorzugt von 3 µm bis 50 µm, aufweisen.

Die Abgabe der feinen Tröpfchen wird vorzugsweise derart gesteuert, dass ihr Impuls beim Auftreffen auf die Oberfläche der flüssigen Schicht nicht ausreicht, um die Oberflächenspannung und/oder die Viskositätskräfte der flüssigen Schicht zumindest teilweise zu überwinden, so dass die feinen Tröpfchen vorzugsweise auf der Oberfläche der flüssigen Schicht zum Liegen kommen. Besonders bevorzugt wird das Manipulationsmittel in Form von feinen Tröpfchen als Nebel auf die Oberfläche der Schicht aufgebracht, so dass dieser insbesondere geschlossene Bereiche ausbildet, die die Oberfläche der Schicht bedecken.

Die feinen Tröpfchen weisen dabei insbesondere ein Volumen von 0,1 pl bis 1 pl, vorzugsweise von 0,3 pl bis 0,8 pl, besonders bevorzugt von 0,5 bis 0,6 pl auf.

Die Tröpfchen weisen dabei insbesondere ein Volumen von 1 pl bis 80 pl, vorzugsweise von 3 pl bis 12 pl, besonders bevorzugt von 5 pl bis 10 pl auf.

Die Geschwindigkeit der Tröpfchen und/oder der feinen Tröpfchen beträgt insbesondere zwischen 0,5 m/s und 12 m/s, vorzugsweise zwischen 3 m/s und 7 m/s, besonders bevorzugt zwischen 5 m/s und 6 m/s.

Während dem Aufbringen des Manipulationsmittels kann die Geschwindigkeit und/oder das Volumen der Tröpfchen und/oder der feinen Tröpfchen variiert werden.

Die Abgabe der Tröpfchen wird vorzugsweise derart gesteuert, dass ihr Impuls beim Auftreffen auf die Oberfläche der flüssigen Schicht ausreicht, um die Oberflächenspannung und/oder die Viskositätskräfte der flüssigen Schicht zumindest teilweise zu überwinden, so dass durch die Tröpfchen eine Verdrängung der flüssigen Schicht erfolgt, wodurch in der flüssigen Schicht Vertiefungen und insbesondere eine Struktur von 10 bis 50 µm Höhenunterschied eingebracht werden kann.

Vorzugsweise ist das Manipulationsmittel dazu ausgebildet, einfallende elektromagnetische Strahlung zumindest teilweise zu absorbieren, wobei vorzugsweise mindestens 10%, besonders bevorzugt mindestens 30%, insbesondere mindestens 50% der einfallenden elektromagnetischen Strahlung absorbiert werden. Auf diese Weise ist es möglich die Oberfläche der Schicht zumindest teilweise von elektromagnetischer Strahlung abzuschirmen, so dass, insbesondere beim Aushärten der flüssigen Schicht, die elektromagnetische Strahlung unterschiedlich stark auf die Oberfläche der Schicht wirkt. An den Stellen der Schicht, die mit dem Manipulationsmittel bedeckt sind, wirkt die elektromagnetische Strahlung schwächer im Vergleich zu freiliegenden Stellen. So kann, wenn beispielsweise eine Wellenlänge von kleiner 300 nm, vorzugsweise kleiner 250 nm, besonders bevorzugt kleiner 200 nm verwendet wird, eine Mikrofaltung an der Oberfläche der Schicht erzeugt werden, die an den Stellen der Schicht, die mit dem Manipulationsmittel bedeckt sind, schwächer ausfällt als an den freiliegenden Stellen. Im Ergebnis werden dann die Stellen die nicht bedeckt waren optisch matter erscheinen als die Stellen, die während dieser Bestrahlung mit dem Manipulationsmittel bedeckt waren. Speziell wird hier eine Wellenlänge von 185 nm verwendet. Die Bestrahlung findet bevorzugt in einer Schutzgasatmosphäre, insbesondere in einer N₂-Atmosphäre, statt.

Vorzugsweise sind das Manipulationsmittel und die Schicht dazu ausgebildet, sich während des Aushärtens nicht miteinander zu verbinden. Dadurch wird das insbesondere rückstandslose Entfernen des Manipulationsmittels deutlich erleichtert.

Vorzugsweise ist eine Vorrichtung zur Durchführung des oben beschriebenen Verfahrens zur Oberflächenbearbeitung vorgesehen, aufweisend:
- eine Transportvorrichtung, die dazu ausgebildet ist, ein Werkstück zu weiteren Elementen der Vorrichtung zu transportieren, und/oder zumindest ein weiteres Element der Vorrichtung zu dem Werkstück zu bewegen;
- als weiteres Element eine Entfernungsvorrichtung, die dazu ausgebildet ist, Teile von der Schicht mechanisch, bevorzugt mit einem Kontaktelement, und/oder fluidisch, bevorzugt mit einem Fluidstrom aus einer Düse, zu entfernen, wobei
die Vorrichtung ferner ein Steuermittel umfasst, das dazu ausgebildet ist, die Transportvorrichtung und die weiteren Elemente der Vorrichtung anzusteuern, um das oben beschriebene Verfahren durchzuführen.

Vorzugsweise ist weiter eine Vorrichtung zur Durchführung der oben beschriebenen Verfahren vorgesehen, aufweisend:
- eine Transportvorrichtung, die dazu ausgebildet ist, ein Werkstück zu weiteren Elementen der Vorrichtung zu transportieren und/oder zumindest ein weiteres Element der Vorrichtung zu dem Werkstück zu bewegen;
- als weiteres Element eine Aufbringungsvorrichtung, insbesondere aufweisend eine digitale Druckvorrichtung, die dazu ausgebildet ist, ein Manipulationsmittel auf eine auf dem Werkstück befindliche, zumindest teilweise flüssige Schicht und/oder auf eine Oberfläche des Werkstückes aufzubringen;

- vorzugsweise als weiteres Element eine Aushärtvorrichtung, die dazu ausgebildet ist, die flüssige Schicht und/oder das Manipulationsmittel auszuhärten;
- als weiteres Element eine Entfernungsvorrichtung, die dazu ausgebildet ist, Teile der Schicht mechanisch und/oder fluidisch zu entfernen, wobei
die Vorrichtung ferner ein Steuermittel umfasst, das dazu ausgebildet ist, die Transportvorrichtung und die weiteren Elemente der Vorrichtung anzusteuern, um eines der Verfahren, wie oben beschrieben, durchzuführen.

Die Vorrichtung kann insbesondere Vorrichtungsmerkmale bzw. Ausbildungen aufweisen, die oben bei der Erläuterung des Verfahrens beschrieben wurden.

Vorzugsweise weist die Transportvorrichtung einen Bandtransport auf, auf dem das Werkstück zu den weiteren Elementen der Vorrichtung transportiert werden kann. Alternativ oder zusätzlich kann auch vorgesehen sein, dass zumindest eines der Elemente der Vorrichtung zu dem Werkstück bewegt wird.

Vorzugsweise weist die Aushärtvorrichtung eine Strahlenquelle für elektromagnetische Strahlung auf, wobei die Wellenlänge der abgegebenen Strahlung vorzugsweise veränderbar ist. Besonders bevorzugt ist die abgegebene Strahlung UV-Strahlung.

Vorzugsweise weist die Aushärtvorrichtung ein Gebläse auf, das dazu ausgebildet ist, einen Fluidstrom, insbesondere einen Luftstrom, auf die Schicht und/oder auf das Manipulationsmittel zu blasen, um eine Trocknung von Schicht und/oder Manipulationsmittel durchzuführen.

Vorzugsweise weist die Entfernungsvorrichtung zur mechanischen Entfernung ein Kontaktelement auf, das dazu ausgebildet ist, mit der Oberfläche der Schicht und/oder dem Manipulationsmittel in Kontakt zu treten, um Teile der Schicht zu entfernen.

Vorzugsweise weist die Entfernungsvorrichtung eine Düse auf, die dazu ausgebildet ist, einen Fluidstrom, vorzugsweise einen Luftstrom, auf die Oberfläche der Schicht strömen zu lassen, um das Teile der Schicht, insbesondere das Manipulationsmittel, zu entfernen. Der Fluidstrom ist bevorzugt wie oben beschrieben ausgebildet. Die Düse ist vorzugsweise beweglich ausgebildet, um den Winkel, unter dem der Fluidstrom auf die Oberfläche der Schicht trifft, variieren zu können.

Vorzugsweise weist die Entfernungsvorrichtung eine Absaugvorrichtung auf, die dazu ausgebildet ist, das Manipulationsmittel mittels Unterdruck von der Schicht abzusaugen und/oder bereits gelöste Teile der Schicht, insbesondere das Manipulationsmittel, aufzusaugen. Die Absaugvorrichtung weist vorzugsweise eine Absaugdüse auf, die besonders bevorzugt beweglich ausgebildet ist und an die Oberfläche der Schicht angenähert werden kann, um das Manipulationsmittel aufzusaugen.

Vorzugsweise weist die Vorrichtung eine Kammer auf, in der zumindest die Düse und/oder die Absaugdüse vorgesehen sind, um gelöste Teile des Manipulationsmittels aufzufangen.

Vorzugsweise weist die Entfernungsvorrichtung eine Heizvorrichtung auf, die dazu ausgebildet ist, die Oberfläche der Schicht und/oder das Manipulationsmittel zu erwärmen. Die Heizvorrichtung kann alternativ oder zusätzlich dazu ausgebildet sein, Wärme an das Kontaktelement zu übertragen, um ein Zusetzen des Kontaktelements, wie oben beschrieben, zu verhindern bzw. zu reduzieren. Es kann auch vorgesehen sein, dass das Kontaktelement die Heizvorrichtung aufweist. Bevorzugt weist die Heizvorrichtung einen IR-Strahler auf.

Vorzugsweise weist das Kontaktelement eine stehende und/oder bewegte Bürste und/oder ein Schleif- und/oder ein Hobelelement auf. Vorzugsweise weist das Kontaktelement, insbesondere die Bürste, Textil- und/oder Kunststofffasern, insbesondere Nylonfasern, und/oder Metall, insbesondere Stahl, Messing oder Kupfer, auf. Im Übrigen kann das Kontaktelement wie oben beschrieben ausgebildet sein.

Ferner kann das Kontaktelement auch Fasern, die ein Schleifmittel enthalten, aufweisen.

Nachfolgend wird die Erfindung anhand bevorzugter Ausführungsbeispiele und unter Zuhilfenahme der beigefügten Zeichnungen näher beschrieben. Es zeigen:
- Fig. 1: eine Ausführungsform der Erfindung, bei der das Entfernen von Teilen der Schicht fluidisch erfolgt;
- Fig. 2: eine Ausführungsform der Erfindung, bei der das Entfernen von Teilen der Schicht mechanisch erfolgt;
- Fig. 3: eine Ausführungsform von Bürsten zur mechanischen Entfernung von Teilen der Schicht;
- Fig. 4: eine weitere Ausführungsform von Bürsten zur mechanischen Entfernung von Teilen der Schicht;
- Fig. 5: eine weitere Ausführungsform von Bürsten zur mechanischen Entfernung von Teilen der Schicht;
- Fig. 6: ein Werkstück in Form einer vorgefrästen Diele mit einer aufgetragenen Schicht;
- Fig. 7: eine Möglichkeit, das Kontaktelement zu reinigen;
- Fig. 8: eine Vorrichtung in Form einer Produktionsstraße;
- Fig. 9: eine Möglichkeit zur Reinigung der Oberfläche der Schicht;
- Fig. 10: einen Querschnitt eines Werkstückes mit einer Schicht, die unterschiedliche Härtegrade aufweist; und
- Fig. 11: ein exemplarisches Ablaufdiagramm eines Verfahrens.

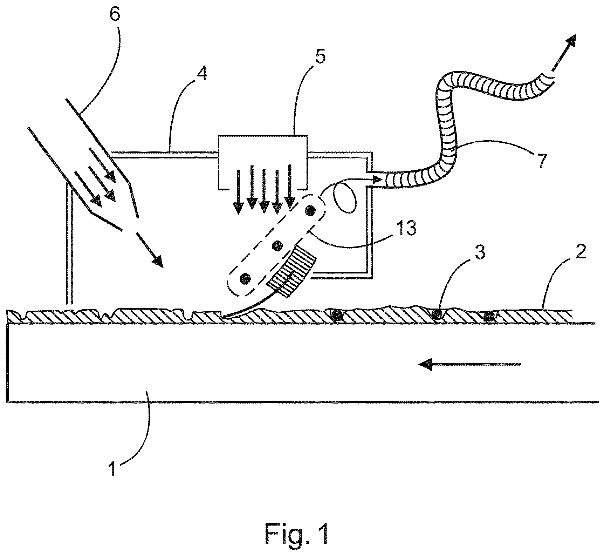

**Fig. 1** zeigt eine Ausführungsform der Erfindung, bei der das Entfernen von Teilen der Schicht, hier speziell des Manipulationsmittels, fluidisch erfolgt.

Es ist ein flächiges Werkstück 1 gezeigt, das in der Zeichnung von rechts nach links bewegt wird. Das Werkstück 1 ist mit einer flüssigen Schicht 2 beschichtet, die nach dem vollständigen Aushärten die Oberfläche des Werkstückes 1 bildet. In die flüssige Schicht 2 ist an einigen Stellen ein Manipulationsmittel 3 eingebracht worden, um die flüssige Schicht 2 zu verdrängen. Das Werkstück 1 wird beispielsweise durch eine Transportvorrichtung einer erfindungsgemäßen Vorrichtung in eine Kammer 4 bewegt. Die Kammer 4 weist in Bewegungsrichtung zunächst eine Aushärtvorrichtung 5 auf, die eine UV-Strahlenquelle umfasst, welche UV-Strahlung auf die flüssige Schicht 2 abgibt, um diese auszuhärten, so dass sich die Viskosität der Schicht 2 verändert. Die UV-Strahlung weist dabei eine Wellenlänge von 200 bis 400 nm auf. Anschließend wird das Werkstück 1 einer Düse 6 zugeführt, die gegen die Bewegungsrichtung des Werkstückes 1 einen Fluidstrom unter einem Winkel zu der Oberfläche der Schicht 2 abgibt. Der Winkel beträgt dabei maximal 45° oder weniger. Bevorzugt erfolgt eine Anpassung des Winkels zwischen 0° und 45°. Diese Anpassung kann beispielsweise in Abhängigkeit des entfernten Manipulationsmittels erfolgen.

Der Fluidstrom ist durch die Düse 6 so ausgebildet, dass er einen Strömungsdruck auf das Manipulationsmittel 3 ausübt, der so hoch ist, dass sich das Manipulationsmittel 3 als Teil 13 der Schicht 2 aus der Schicht 2 löst.

Durch den Druck des Fluidstroms werden anschließend die gelösten Teile 13 des Manipulationsmittels 3 (gestrichelt umrahmt) nach rechts getrieben, wo sie von einer Absaugvorrichtung 7 durch Unterdruck aufgefangen und aus der Kammer 4 entfernt werden.

Der Fluidstrom ist in einer Ausführungsform derart ausgebildet, dass er sich über die gesamte Breite des Werkstückes 1, d.h. in einer Erstreckungsrichtung des Werkstückes 1 senkrecht zur Zeichenebene erstreckt. Auf diese Weise ist sichergestellt, dass sämtliche Teile des Manipulationsmittels 3 von dem Fluidstrom erfasst werden, was insbesondere bei chaotisch bzw. unregelmäßig eingebrachtem Manipulationsmittel 3 das gezielte Anströmen einzelner Bereiche der Oberfläche der Schicht 2 überflüssig macht.

Als Fluid kommt hier eine Flüssigkeit oder ein gasförmiger Stoff zum Einsatz. Speziell kann als Fluid auch Wasser und/oder Luft eingesetzt werden.

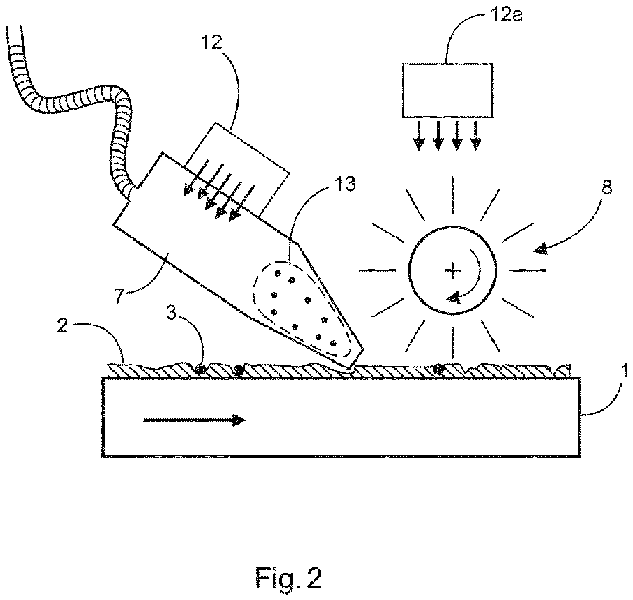

**Fig. 2** zeigt eine Ausführungsform der Erfindung, bei der das Entfernen von Teilen der Schicht mechanisch erfolgt.

Es ist ein flächiges Werkstück 1 gezeigt, das in der Zeichnung von links nach rechts bewegt wird. Das Werkstück 1 ist mit einer flüssigen Schicht 2 beschichtet, die nach dem vollständigen Aushärten die Oberfläche des Werkstückes 1 bildet. In die flüssige Schicht 2 ist an einigen Stellen ein Manipulationsmittel 3 eingebracht worden, um die flüssige Schicht 2 zu verdrängen. Das Werkstück 1 wird beispielsweise durch eine Transportvorrichtung einer erfindungsgemäßen Vorrichtung bewegt.

In Bewegungsrichtung ist zunächst eine Absaugvorrichtung 7 angeordnet, die dazu ausgebildet ist, mittels Unterdruck gelöste Teile 13 der Schicht 2, insbesondere das gelöste Manipulationsmittel 3, aufzusaugen. Dazu ist die Absaugdüse der Absaugvorrichtung 7 nahe der Oberfläche der Schicht 2 ausgerichtet. Der Absaugvorrichtung 7 nachgeordnet ist eine Bürste 8 angeordnet, die als Walzenbürste ausgebildet ist. Diese erstreckt sich senkrecht zur Zeichenebene quer zur Bewegungsrichtung des Werkstückes 1. Die Walzenbürste wird in dieser Ausführungsform gegenläufig zu der Bewegungsrichtung des Werkstückes 1 gedreht. Die Absaugvorrichtung 7 weist ferner eine Strahlenquelle 12 auf. Diese ist dazu ausgebildet, elektromagnetische Strahlung, wie UV-Strahlung, zur Aushärtung der aufgesaugten Teile 13 der Schicht 2, abzugeben, wodurch innerhalb der Absaugvorrichtung 7 eine Härtung der Teile 13 erfolgt, so dass diese nicht Gefahr laufen innerhalb der Absaugvorrichtung 7 anzuhaften und diese zuzusetzen.

Durch den Kontakt der Borsten der Bürste 8 werden Teile 13 der Schicht 2, insbesondere das Manipulationsmittel 3, aus der Schicht 2 ausgebürstet und in Richtung der Absaugvorrichtung 7 befördert. Diese nimmt die gelösten Teile 13 (gestrichelt umrahmt) auf.

Schließlich ist eine weitere Strahlenquelle 12a gezeigt, da dazu ausgebildet ist, elektromagnetische Strahlung, insbesondere UV-Strahlung, auf die Bürste 8 abzugeben, um dort anhaftendes Material von Teilen der Schicht 2 auszuhärten und/oder zu verspröden, um die Bürste 8 zu reinigen, wie oben beschrieben.

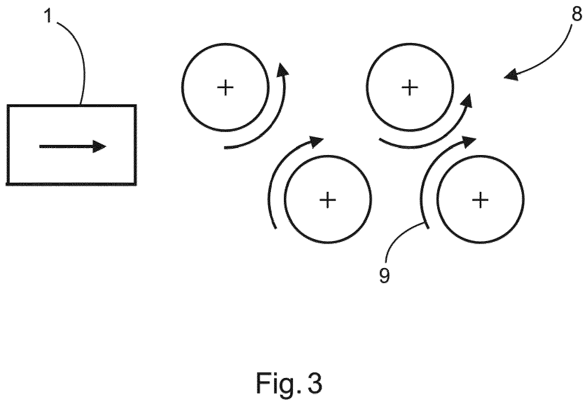

**Fig. 3** zeigt eine Ausführungsform von Bürsten zur mechanischen Entfernung von Teilen der Schicht.

Es sind ein Werkstück 1 sowie mehrere Bürsten 8 in der Draufsicht gezeigt. Das Werkstück 1 wird von links nach rechts unter den Bürsten 8 hindurchbewegt. Die Bürsten 8 sind hier als Tellerbürsten ausgebildet, die um eine jeweilige Achse in den gezeigten Rotationsrichtungen 9 rotieren. Wird das Werkstück 1 auf dem sich eine Schicht mit oder ohne einem Manipulationsmittel (beides nicht gezeigt) befindet, unter den Bürsten 8 hindurchbewegt, so werden Teile der Schicht, insbesondere das Manipulationsmittel, mechanisch durch Kontakt mit den sich relativ zu dem Werkstück 1 bewegenden Bürsten 8 entfernt.

Durch die Drehbewegung der Bürsten 8 wird zusätzlich zu der Relativbewegung zwischen Werkstück 1 und Bürsten 8 eine weitere Relativbewegungskomponente hinzugefügt, so dass sich die Kraft, mit der die Borsten der Bürsten 8 auf die Schicht bzw. auf das Manipulationsmittel einwirken, erhöht wird.

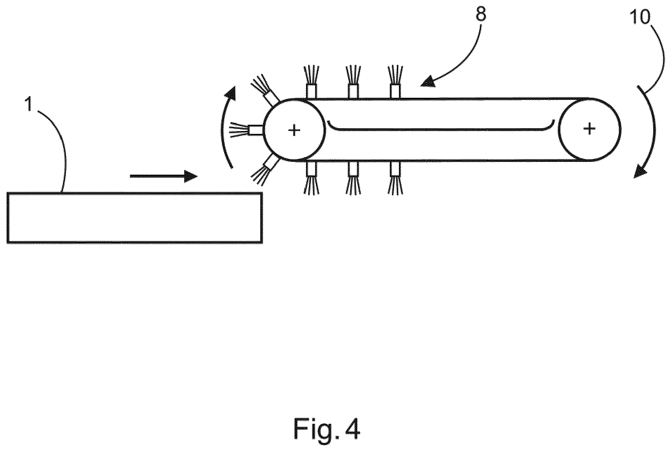

**Fig. 4** zeigt eine weitere Ausführungsform von Bürsten zur mechanischen Entfernung von Teilen der Schicht, insbesondere des Manipulationsmittels.

Es sind ein Werkstück 1 mit einer Schicht mit oder ohne einem Manipulationsmittel (beides nicht gezeigt) sowie ein Bürstenband in der Seitenansicht gezeigt. Das Werkstück 1 wird von links nach rechts bewegt. Das Bürstenband ist mit mehreren Bürsten 8 besetzt.

Das Bürstenband läuft in der gezeigten Umlaufrichtung 10 zyklisch um, so dass sich die Bürsten 8, die sich im Moment an der Unterseite des Bürstenbandes befinden, entgegen der Bewegung des Werkstückes 1 von rechts nach links bewegen. Auf diese Weise wird hier zusätzlich zu der Relativbewegung zwischen Werkstück 1 und Bürsten 8 aufgrund der Bewegung des Werkstückes 1 von links nach rechts eine weitere Relativbewegungskomponente hinzugefügt, so dass sich die Kraft, mit der die Borsten der Bürsten 8 auf die Schicht bzw. auf das Manipulationsmittel einwirken, erhöht wird.

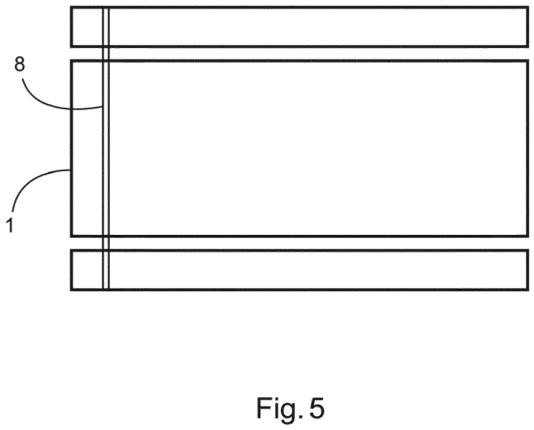

**Fig. 5** zeigt eine weitere Ausführungsform von Bürsten zur mechanischen Entfernung von Teilen der Schicht, insbesondere des Manipulationsmittels.

Es ist ein Werkstück 1 in der Draufsicht gezeigt, das von links nach rechts unter einem Balken 11 hindurchbewegt wird, der an seiner, dem Werkstück 1 zugewandten Seite Bürsten aufweist, die mit dem Werkstück 1 bzw. mit der Schicht und/oder dem Manipulationsmittel darauf (beides nicht gezeigt) in Kontakt treten können. Der Balken 11 erstreckt sich dabei zumindest über die gesamte Erstreckung des Werkstückes 1, in der Zeichnung also von oben nach unten.

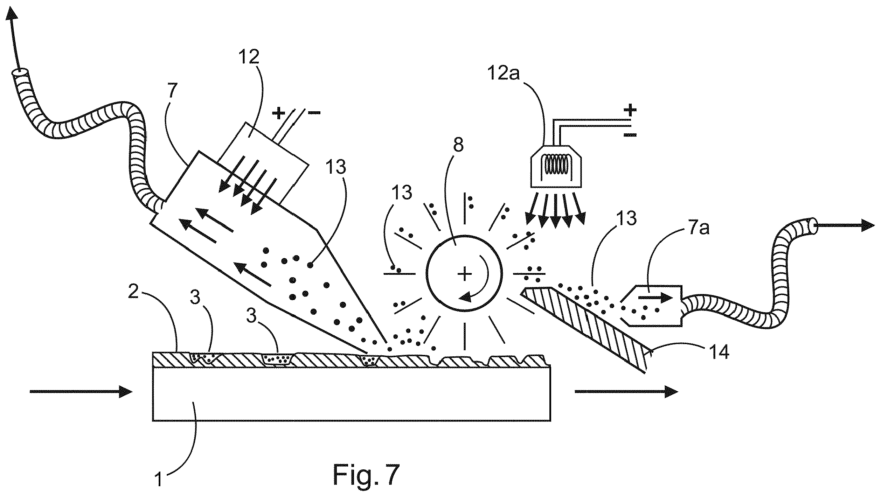

**Fig. 7** zeigt eine Möglichkeit, das Kontaktelement zu reinigen.

Es ist ein flächiges Werkstück 1 gezeigt, das in der Zeichnung von links nach rechts bewegt wird. Das Werkstück 1 ist mit einer flüssigen Schicht 2 beschichtet, die nach dem vollständigen Aushärten die Oberfläche des Werkstückes 1 bildet. In die flüssige Schicht 2 ist an einigen Stellen ein Manipulationsmittel 3 eingebracht worden, um die flüssige Schicht 2 zu verdrängen. Das Werkstück 1 wird beispielsweise durch eine Transportvorrichtung einer erfindungsgemäßen Vorrichtung bewegt.

In Bewegungsrichtung ist zunächst eine Absaugvorrichtung 7 angeordnet, die dazu ausgebildet ist, mittels Unterdruck gelöste Teile 13 der Schicht 2, insbesondere das gelöste Manipulationsmittel 3, aufzusaugen. Dazu ist die Absaugdüse der Absaugvorrichtung 7 nahe der Oberfläche der Schicht 2 ausgerichtet. Der Absaugvorrichtung 7 nachgeordnet ist eine Bürste 8 angeordnet, die als Walzenbürste ausgebildet ist. Diese erstreckt sich senkrecht zur Zeichenebene quer zur Bewegungsrichtung des Werkstückes 1. Die Walzenbürste wird in dieser Ausführungsform gegenläufig zu der Bewegungsrichtung des Werkstückes 1 gedreht. Die Absaugvorrichtung 7 weist ferner eine Strahlenquelle 12 auf. Diese ist dazu ausgebildet, elektromagnetische Strahlung, wie UV-Strahlung, zur Aushärtung der aufgesaugten Teile 13 der Schicht 2, abzugeben, wodurch innerhalb der Absaugvorrichtung 7 eine Härtung der Teile 13 erfolgt, so dass diese nicht Gefahr laufen innerhalb der Absaugvorrichtung 7 anzuhaften und diese zuzusetzen.

Die Funktionsweise der Bürste 8 sowie der Absaugvorrichtung 7 zur Entfernung von Teilen 13 der Schicht 2, insbesondere des Manipulationsmittels 3, ist im Übrigen mit der Funktionsweise der Ausführungsform in Fig. 2 identisch.

Zur Reinigung des Kontaktelementes bzw. der Bürste 8 ist hier eine Strahlenquelle 12a vorgesehen, die UV-Strahlung auf die Bürste 8 und somit auf die an den Borsten der Bürste 8 anhaftenden Teile 13 der Schicht 2, die Material der Schicht 2 sowie Material des Manipulationsmittels 3 aufweisen können, abstrahlt. In ihrer Rotationsbewegung treffen die Borsten der Bürste 8 nachdem sie von der Strahlenquelle 12a bestrahlt wurden auf eine Abstreifkante 14. Die Abstreifkante 14 erstreckt sich in der Zeichnung nach rechts unten und weist eine Oberfläche auf, die derart ausgeformt ist, dass Teile 13 der Schicht 2, die aus den Borsten gelöst wurden, in Richtung einer Absaugvorrichtung 7a gelenkt werden, die sich an dieser Oberfläche befindet. Die Absaugvorrichtung 7a ist dazu ausgebildet, die gelösten Teile 13 der Schicht 2 aufzunehmen und mittels Unterdruck abzusaugen.

Die Funktionsweise der Reinigung der Bürste 8 stellt sich somit wie folgt dar:
Innerhalb eines Zyklus, d.h. innerhalb einer Umdrehung der Bürste 8, treffen die Borsten der Bürste 8 zunächst auf die Oberfläche der Schicht 2 wodurch hier Teile 13 der Schicht 2 entfernt werden. Teile 13, die abgelöst werden und sich nicht in den Borsten der Bürste 8 festsetzen, werden durch die Bürste in Richtung der Absaugvorrichtung 7 befördert, die diese mittels Unterdruck aufsaugt. Teile 13, die sich in den Borsten der Bürste 8 festgesetzt haben, werden im weiteren Verlauf der Drehung der Bürste 8 von der Strahlenquelle 12a bestrahlt, wodurch diese aushärten. Die Bestrahlung der Strahlenquelle 12a kann auch derart stark sein, dass die Teile 13, die sich in den Borsten der Bürste 8 festgesetzt haben, verspröden. Anschließend treffen die Borsten auf die Abstreifkante 14, wodurch eine mechanische Einwirkung auf die Teile 13 erreicht wird. Aufgrund dessen lösen sich die gehärteten und/oder versprödeten Teile 13 aus den Borsten der Bürste 8, wobei sie bedingt durch ihre Ablösegeschwindigkeit und die geformte Oberfläche der Abstreifkante 14 zu der Absaugvorrichtung 7a befördert werden. Die Absaugvorrichtung 7a saugt diese Teile 13 schließlich auf. Die so gereinigten Borsten der Bürste 8 stehen nun in einem neuen Zyklus zur Entfernung von Teilen 13 der Schicht 2 wieder zur Verfügung.

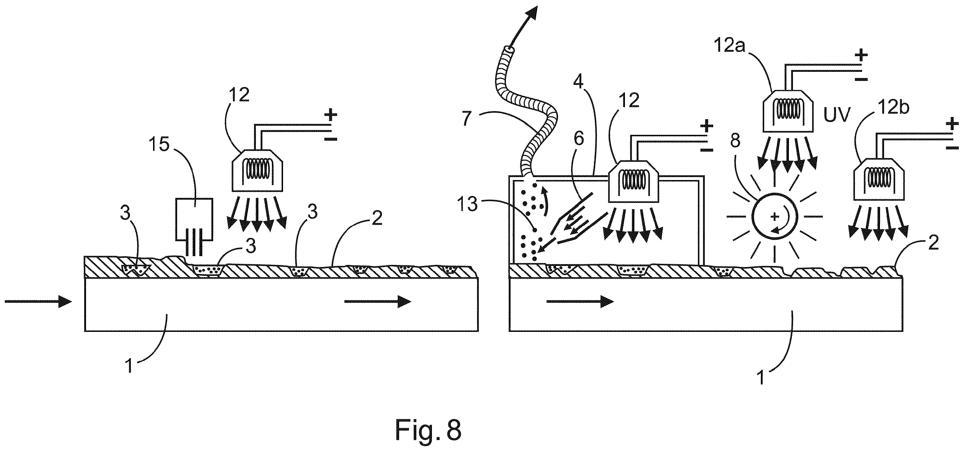

Fig. 8 zeigt eine Vorrichtung in Form einer Produktionsstraße.

Es sind zwei Werkstücke 1 gezeigt, die nacheinander in Bewegungsrichtung von links nach rechts bewegt werden. Dazu ist eine Transportvorrichtung (nicht gezeigt) vorgesehen. Das Werkstück 1 weist auf seiner Oberfläche eine flüssige Schicht 2 auf. In und/oder auf der Schicht 2 ist ein Manipulationsmittel 3 enthalten. In Bewegungsrichtung sind nacheinander von links nach rechts folgende Elemente angeordnet. Zunächst ist ein stehendes Kontaktelement in Form einer Bürste 15 angeordnet, die dazu ausgebildet ist, um mit der Oberfläche der Schicht 2 in Kontakt zu treten, um Teile der Schicht 2 mechanisch zu entfernen. Dadurch wird hier insbesondere erreicht, dass in die Schicht 2 eingeschlossenes Manipulationsmittel 3 freigelegt wird. Der Bürste 15 nachgeordnet ist eine Strahlenquelle 12, die dazu ausgebildet ist, UV-Strahlung in Richtung des Werkstückes 1 bzw. der Schicht 2 abzugeben, um die Schicht 2 zumindest teilweise auszuhärten.

Anschließend ist in Bewegungsrichtung ein Element vorgesehen, das eine Kammer 4 aufweist, durch die das Werkstück 1 bewegt wird. Die Kammer 4 weist in Bewegungsrichtung zunächst eine Düse 6 auf, die gegen die Bewegungsrichtung des Werkstückes 1 einen Fluidstrom unter einem Winkel zu der Oberfläche der Schicht 2 abgibt. Der Winkel beträgt dabei maximal 90° oder weniger. Bevorzugt erfolgt eine Anpassung des Winkels zwischen 0° und 30°. Diese Anpassung kann beispielsweise in Abhängigkeit des entfernten Materials des Manipulationsmittels und/oder in Abhängigkeit des entfernten Materials der Schicht 2 erfolgen. Der Fluidstrom weist Festkörper auf, wie sie oben beschrieben wurden, um Teile 13 der Schicht 2 zu entfernen. Die Kammer weist ferner eine Absaugvorrichtung 7 auf, die dazu ausgebildet ist, gelöste Teile 13 der Schicht 2 aufzusaugen. Innerhalb der Kammer befindet sich in Bewegungsrichtung hinter der Düse 6 eine Strahlenquelle 12, die dazu ausgebildet ist, die Schicht 2 mit Strahlung zu bestrahlen, um diese teilweise auszuhärten, so dass sich die Viskosität der Schicht 2 verändert. Die Strahlung kann beispielsweise UV-Strahlung mit einer Wellenlänge von 200 bis 400 nm sein.

Der Fluidstrom ist in einer Ausführungsform derart ausgebildet, dass er sich über die gesamte Breite des Werkstückes 1, d.h. in einer Erstreckungsrichtung des Werkstückes 1 senkrecht zur Zeichenebene erstreckt. Auf diese Weise ist sichergestellt, dass sämtliche Bereiche der Schicht 2 von dem Fluidstrom erfasst werden.

Als Fluid kommt hier eine Flüssigkeit oder ein gasförmiger Stoff zum Einsatz. Speziell kann als Fluid auch Wasser und/oder Luft eingesetzt werden.

Der Kammer 4 nachgelagert ist ein Kontaktelement mit einer Bürste 8 in Form einer Walzenbürste angeordnet. Die Bürste 8 ist dazu ausgebildet Teile der Schicht 2 mechanisch zu entfernen. Um zur Reinigung der Bürste 8 Material der Teile der Schicht 2, das an den Borsten anhaftet auszuhärten, um es beispielsweise an einer Abstreifkante (nicht gezeigt) aus den Borsten zu entfernen, ist oberhalb der Bürste eine Strahlenquelle 12a angeordnet, die beispielsweise UV-Strahlung auf die Bürste 8 abgibt.

Die Reinigung der Bürste 8 kann im Wesentlichen entsprechend der Beschreibung zu Fig. 7 erfolgen.

Der Bürste 8 in Bewegungsrichtung nachgelagert ist eine weitere Strahlenquelle 12b angeordnet. Diese gibt beispielsweise UV-Strahlung auf die Schicht 2 und möglicherweise gewünscht enthaltenes Manipulationsmittel 3 ab, um eine Endhärtung durchzuführen.

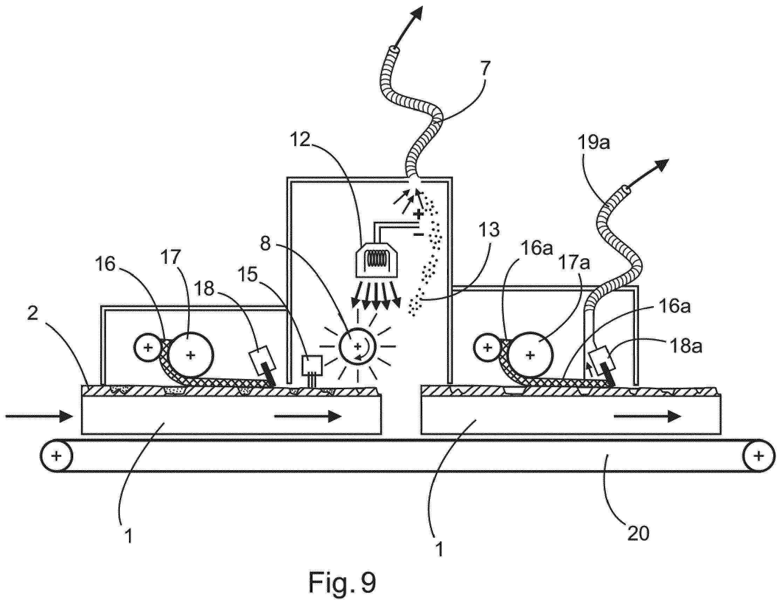

**Fig. 9****.** zeigt das Entfernen von Teilen der Schicht 2 mit vorangestellter und nachfolgender Reinigung der Schicht 2 mit einer Vorrichtung in Form einer Produktionsstraße.

Es sind zwei Werkstücke 1 gezeigt, die von links nach rechts durch eine Transportvorrichtung mit einem Bandtransport 20 bewegt werden. Auf den Werkstücken 1 ist eine Schicht 2 aufgebracht.

Dabei wird vor dem Entfernen von Teilen der Schicht 2 zunächst ein Reinigungsmittel 16 mit Hilfe einer Auftragsvorrichtung 17, die hier eine Auftragswalze aufweist, auf die Schicht 2 aufgebracht. Dieses Reinigungsmittel 16 wird anschließend mit einem Abstreifer 18 zumindest teilweise wieder entfernt. Anschließend erfolgt die Entfernung von Teilen der Schicht 2 mit einem stehenden Kontaktelement 15 und einer Bürste 8, wobei eine UV-Strahlenquelle 12 vorgesehen ist, um die Bürste 8 und das Kontaktelement 15 zu bestrahlen, um daran anhaftendes Material aus entfernten Teilen der Schicht 2 auszuhärten bzw. zu verspröden. Mit Hilfe einer Absaugvorrichtung 7 werden diese Teile 13 wie oben beschrieben kontinuierlich abgesaugt. Zudem kann, wie in Fig. 7 beschrieben, eine Abstreifkante (nicht gezeigt) vorgesehen sein.

Anschließend erfolgt eine weitere Reinigung der restlichen, auf dem Werkstück 1 verbliebenen Oberfläche 2 mit Hilfe eines Reinigungsmittels 16a, einer Auftragsvorrichtung 17a und einer Vorrichtung zum Wiederentfernen des Reinigungsmittels 16a. Die Vorrichtung zum Wiederentfernen des Reinigungsmittels 16a weist dazu einen Abstreifer 18a, der mit der Oberfläche der Schicht 2 in Kontakt steht, und eine Absaugvorrichtung 19a auf. Die Absaugvorrichtung 19a ist dazu ausgebildet, das Reinigungsmittel 16a, das an dem Abstreifer 18a zurückgehalten wird, abzusaugen und abzuführen.

Eine solche Absaugvorrichtung zur Entfernung des Reinigungsmittels 16 kann auch an dem ersten Abstreifer 18 vorgesehen sein.

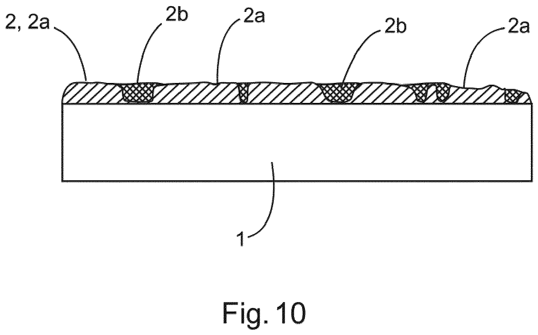

**Fig. 10** zeigt ein Werkstück 1 mit einer Schicht 2 auf der Oberfläche des Werkstückes 1, wobei die Schicht 2 zumindest teilweise ausgehärtet wurde und nun Bereiche 2a mit einem höheren Härtegrad, und Bereiche 2b mit einem niedrigeren Härtegrad aufweist, wobei sich diese Bereiche im Härtegrad um einen Faktor von mindestens 1,5, vorzugsweise von mindestens 2, unterscheiden. Das hier dargestellte Werkstück 1 mit der Schicht 2 wird beispielsweise in einem oben beschriebenen Verfahren zur Oberflächenbearbeitung weiterbearbeitet.

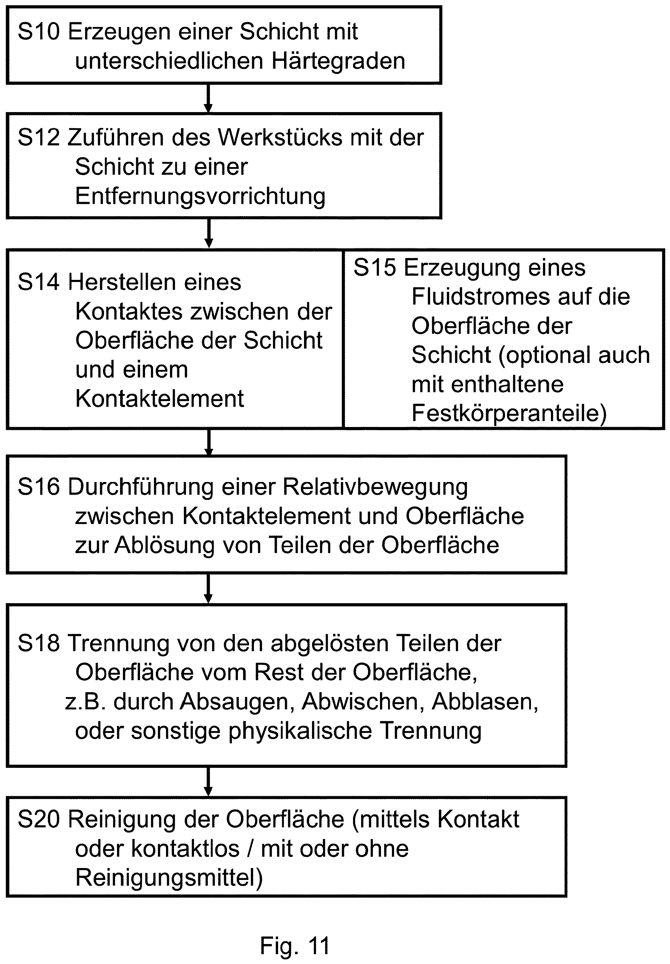

**Fig. 11** zeigt ein exemplarisches Ablaufdiagramm eines Verfahrens.

In einem Schritt S10 wird eine Schicht auf einem Werkstück, beispielsweise wie in Fig. 10 gezeigt, erzeugt, wobei die Schicht unterschiedliche Härtegrade aufweist.

In Schritt S12 wird das Werkstück mit der Schicht zu einer Entfernungsvorrichtung bewegt. Hier erfolgt gemäß Schritt S14 ein Herstellen eines Kontaktes zwischen der Oberfläche der Schicht und einem Kontaktelement der Entfernungsvorrichtung.

Alternativ oder zusätzlich wird gemäß Schritt S15 ein Fluidstrom mit optionalem Festkörperanteil erzeugt, der auf die Oberfläche der Schicht wirkt, wodurch Teile der Schicht entfernt bzw. abgelöst werden.

Nach Schritt S16 wird nach der Herstellung des Kontaktes zwischen der Oberfläche der Schicht und einem Kontaktelement gemäß Schritt S14 eine Relativbewegung zwischen Kontaktelement und Oberfläche durchgeführt, wodurch Teile der Schicht entfernt bzw. abgelöst werden.

Nach Schritt S18 erfolgt eine Trennung der abgelösten Teile der Oberfläche der Schicht von der restlichen Schicht. Dies kann beispielsweise durch Absaugen, Abwischen oder Abblasen oder durch eine sonstige geeignete Maßnahme erfolgen.

In Schritt S20 erfolgt eine Reinigung der Oberfläche der Schicht mittels Kontakt oder auch kontaktlos und/oder durch Einsatz eines Reinigungsmittels.

Das Verfahren kann durch Vertauschen, Weglassen und/oder Wiederholen einzelner Schritte sowie durch Ergänzen weiterer Schritte weitergebildet werden.

Die Erfindung ist nicht auf die hier gezeigten Ausführungsformen beschränkt. Vielmehr können weitere Vorrichtungen und/oder Verfahren erhalten werden, die ebenfalls der Erfindung entsprechen, indem einzelne Merkmale miteinander kombiniert, ausgetauscht oder weggelassen werden.

Beispielsweise kann die Konfiguration aus Fig. 7 in die Produktionsstraße aus Fig. 8 ergänzend integriert sein, oder anstelle der Kammer 4 und/oder der hier gezeigten Bürste 8 vorgesehen sein.

Auch wenn in den Figuren 2, 7 und 8 Bürsten 8 in Form von Walzenbürsten vorgesehen sind, können ergänzend oder alternativ auch die Ausführungen der Bürsten 8 aus den Figuren 3, 4 und 5 vorgesehen sein.

Sämtliche Düsen 6, die in den Figuren 1 und 8 gezeigt sind, können dazu ausgebildet sein, einen Fluidstrom mit oder ohne Festkörper, wie sie oben beschrieben wurden, abzugeben. Der Fluidstrom kann ein Gas und/oder eine Flüssigkeit enthalten, wobei er speziell Luft und/oder Wasser enthält.

Die in sämtlichen Figuren gezeigten Strahlenquellen können dazu ausgebildet sein, alternativ oder zusätzlich zu elektromagnetischer Strahlung, insbesondere UV-Strahlung, auch andere Strahlung, wie z.B. Elektronenstrahlung, abzugeben. Die Strahlungsart und/oder die entsprechende Wellenlänge werden dabei abhängig von der Materialzusammensetzung der Schicht 2 und/oder des Manipulationsmittels 3 und/oder abhängig von der gewünschten Wirkung der Strahlung auf Schicht 2 und/oder Manipulationsmittel 3 gewählt. So kann zur vollständigen Aushärtung eine andere Wellenlänge und/oder Strahlung eingesetzt werden als wenn in einem vorgelagerten Schritt lediglich die Viskosität der Schicht 2 verändert werden soll, um beispielsweise ein Verlaufen der durch das Manipulationsmittel 3 eingebrachten Vertiefungen zu verhindern.

Sämtliche der hier gezeigten Ausführungsformen der Erfindung, die mindestens eine Bürste 8 aufweisen, können ferner dahingehend ausgebildet sein, dass die mindestens eine Bürste 8 beweglich vorgesehen ist. Darunter ist zu verstehen, dass die mindestens eine Bürste 8 aktiv durch ein vorgegebenes Bewegungsmuster bewegt werden kann. So kann beispielsweise eine Tellerbürste an einer schwenkbaren Aufhängung vorgesehen sein.

Nachfolgend werden Aspekte der Erfindung erläutert. Diese wirken nicht beschränkend auf die Erfindung sondern stellen lediglich bevorzugte Ausprägungsformen der Erfindung dar.

Gemäß einem ersten Aspekt ist ein Verfahren zum Entfernen von Teilen einer Schicht 2 auf einer Oberfläche eines Werkstückes 1 vorgesehen, wobei das Verfahren die folgenden Schritte aufweist:
- Herstellung eines mechanischen Kontaktes zwischen einem Kontaktelement und der Schicht 2 auf der Oberfläche zum Entfernen von Teilen 13 der Schicht 2;
- physikalisches Trennen von entfernten Teilen 13 der Schicht 2 von den auf der Oberfläche des Werkstückes 1 verbleibenden Teilen der Schicht 2.

Gemäß einem zweiten Aspekt der Erfindung, der mit dem ersten Aspekt kombiniert werden kann oder für sich allein steht, ist ein Verfahren zum Entfernen von Teilen einer Schicht 2 auf einer Oberfläche eines Werkstückes 1 vorgesehen, wobei das Verfahren die folgenden Schritte aufweist:
- Erzeugung eines Fluidstromes, bevorzugt in einem Winkel zwischen 1° und 90° zur Schicht 2, zum Entfernen von Teilen 13 der Schicht 2;
- physikalisches Trennen von entfernten Teilen 13 der Schicht 2 von den auf der Oberfläche des Werkstückes 1 verbleibenden Teilen der Schicht 2.

Gemäß einem dritten Aspekt der Erfindung ist ein Verfahren nach dem ersten und zweiten Aspekt vorgesehen, wobei
jeder der Schritte des Verfahrens zumindest einmal ausgeführt wird.

Gemäß einem vierten Aspekt der Erfindung ist ein Verfahren nach einem der vorstehenden Aspekte vorgesehen, wobei
die Schicht 2 auf der Oberfläche des Werkstückes 1 Härteunterschiede von mindestens einem Faktor 1,5, vorzugsweise mindestens einem Faktor 2, zwischen härteren Bereichen 2a und weniger harten Bereichen 2b aufweist.

Gemäß einem fünften Aspekt der Erfindung ist ein Verfahren nach einem der vorstehenden Aspekte vorgesehen, wobei
das physikalische Trennen von den abgelösten Teilen 13 der Schicht 2 von den auf der Oberfläche des Werkstückes 1 verbleibenden Teilen der Schicht 2 durch Absaugen, Abwischen, Abblasen, oder durch eine Kombination dieser Schritte erfolgt.

Gemäß einem sechsten Aspekt der Erfindung ist ein Verfahren nach einem der vorstehenden Aspekte und insbesondere nach dem ersten, dritten, vierten oder fünften Aspekt vorgesehen, wobei
sich die Schicht 2, die sich auf der Oberfläche des Werkstückes 1 befindet, und das Kontaktelement beim Entfernen von Teilen der Schicht relativ zueinander bewegen.

Gemäß einem siebten Aspekt der Erfindung ist ein Verfahren nach einem der vorstehenden Aspekte und insbesondere nach dem ersten, dritten, vierten, fünften oder sechsten Aspekt vorgesehen, wobei
das Kontaktelement eine stehende und/oder bewegte Bürste 8, 15 und/oder ein Schleif- und/oder ein Hobelelement aufweist, wobei vorzugsweise die Bürste 8 zumindest als bewegte Bürste 8 eine Tellerbürste und/oder eine Walzenbürste und/oder ein Bürstenband und/oder als stehende Bürste 8 einen Balken 11 mit Bürstenbesatz aufweist, und/oder wobei
das Kontaktelement, insbesondere die Bürste 8, 15, Textil- und/oder Kunststofffasern, insbesondere Nylonfasern, Anderlon, und/oder Metall, insbesondere Stahl, Messing oder Kupfer als Borsten aufweist.

Gemäß einem achten Aspekt der Erfindung ist ein Verfahren nach einem der vorstehenden Aspekte vorgesehen, wobei
gleichzeitig mit dem Herstellen des mechanischen Kontaktes zwischen dem Kontaktelement und der Schicht 2 auf der Oberfläche und/oder gleichzeitig mit der Erzeugung des Fluidstromes auf die Schicht 2 eine Bestrahlung der Schicht 2 und/oder des Kontaktelementes und/oder der Umgebung des Kontaktelementes in der sich getrennte Teile der Schicht 2 befinden, vorzugsweise mit elektromagnetischer Strahlung, erfolgt.

Gemäß einem neunten Aspekt der Erfindung ist ein Verfahren nach einem der vorstehenden Aspekte und insbesondere nach dem ersten, dritten, vierten, fünften, sechsten, siebten oder achten Aspekt vorgesehen, wobei
das Kontaktelement 8, 15 während des physikalischen Trennens kontinuierlich gereinigt wird, wobei die Reinigung vorzugsweise durch Verwendung einer Kombination aus einer elektromagnetischen Strahlenquelle 5, 12 und/oder einer Absaugvorrichtung 7, 7a und/oder einer mechanischen Abschlagkante 14 durchgeführt wird.

Gemäß einem zehnten Aspekt der Erfindung ist ein Verfahren nach einem der vorstehenden Aspekte und insbesondere nach dem zweiten, dritten, vierten, fünften, sechsten, siebten, achten oder neunten Aspekt vorgesehen, wobei
eine Düse 6, die zur Erzeugung des Fluidstroms ausgebildet ist, während des physikalischen Trennens kontinuierlich gereinigt wird, wobei die Reinigung vorzugsweise durch eine Kombination aus einer elektromagnetischen Strahlenquelle 5, 12 und/oder einer Absaugvorrichtung 7, 7a und/oder einer oder mehrere weitere Trocknungseinrichtungen oder Strahlenquellen 5, 12 durchgeführt wird.

Gemäß einem elften Aspekt der Erfindung ist ein Verfahren nach einem der vorstehenden Aspekte und insbesondere nach dem ersten, dritten, vierten, fünften, sechsten, siebten, achten, neunten oder zehnten Aspekt vorgesehen, wobei
vor dem Herstellen des mechanischen Kontaktes zwischen dem Kontaktelement und der Schicht 2 eine Reinigung der Oberfläche der Schicht 2 durchgeführt wird, und/oder wobei nach dem physikalischen Trennen von Teilen der Schicht 2 eine Reinigung der restlichen auf der Oberfläche des Werkstückes 1 verbleibenden Schicht 2 durchgeführt wird.

Gemäß einem zwölften Aspekt der Erfindung ist ein Verfahren nach einem der vorstehenden Aspekte und insbesondere nach dem zweiten, dritten, vierten, fünften, sechsten, siebten, achten, neunten, zehnten oder elften Aspekt vorgesehen, wobei
vor dem Erzeugen des Fluidstromes auf die Schicht 2 eine Reinigung der Oberfläche durchgeführt wird, und/oder nach dem physikalischen Trennen von Teilen der Schicht 2 eine Reinigung der restlichen auf der Oberfläche des Werkstückes 1 verbleibenden Schicht 2 durchgeführt wird.

Gemäß einem dreizehnten Aspekt der Erfindung ist ein Verfahren nach dem neunten, zehnten, elften oder zwölften Aspekt vorgesehen, wobei
die kontinuierliche Reinigung des Kontaktelementes, insbesondere der Bürste 8, durch eine Bestrahlung mit UV-Strahlung, bevorzugt mit einer Wellenlänge zwischen 180 und 400 nm, in Kombination mit einem Abstreifen von ausgehärteten Restbestandteilen 13 aus den abgetrennten Teilen der Schicht 2 an einer Abschlagkante 14 und einer Absaugvorrichtung dieser Restbestandteile 13 mit Hilfe einer Absaugvorrichtung 7, 7a erfolgt.

Gemäß einem vierzehnten Aspekt der Erfindung ist ein Verfahren nach dem zehnten, elften, zwölften oder dreizehnten Aspekt vorgesehen, wobei
die kontinuierliche Reinigung der Düse 6 durch eine Bestrahlung mit UV-Strahlung, bevorzugt mit einer Wellenlänge zwischen 180 und 400 nm, in Kombination mit einem Absaugen von Restbestandteilen 13 aus den abgetrennten Teilen der Schicht 2 mit Hilfe einer Absaugvorrichtung 7, 7a erfolgt.

Gemäß einem fünfzehnten Aspekt der Erfindung ist ein Verfahren nach dem elften, zwölften, dreizehnten oder vierzehnten Aspekt vorgesehen, wobei
zur Reinigung der Oberfläche der Schicht 2 ein Reinigungsmittel 16 auf die Schicht aufgetragen wird, das vorzugsweise anschließend, besonders bevorzugt mit Hilfe eines Abstreifers 18 und/oder einer Absaugvorrichtung 19, wieder entfernt wird.

Gemäß einem sechzehnten Aspekt der Erfindung ist eine Vorrichtung zur Durchführung des Verfahrens nach einem der vorstehenden fünfzehn Aspekte vorgesehen, wobei die Vorrichtung folgendes aufweist:
- eine Transportvorrichtung, die dazu ausgebildet ist, ein Werkstück 1 zu weiteren Elementen der Vorrichtung zu transportieren, und/oder zumindest ein weiteres Element der Vorrichtung zu dem Werkstück 1 zu bewegen;
- als weiteres Element eine Entfernungsvorrichtung, die dazu ausgebildet ist, Teile 13 von der Schicht 2 mechanisch, bevorzugt mit einem Kontaktelement, und/oder fluidisch, bevorzugt mit einem Fluidstrom aus einer Düse 6, zu entfernen, wobei
die Vorrichtung ferner ein Steuermittel umfasst, das dazu ausgebildet ist, die Transportvorrichtung und die weiteren Elemente der Vorrichtung anzusteuern, um das Verfahren nach einem der vorstehenden fünfzehn Aspekte durchzuführen.

### Bezugszeichenliste

- 1: Werkstück
- 1a: Verbindungselement
- 2: Schicht
- 3: Manipulationsmittel
- 4: Kammer
- 5: Aushärtvorrichtung
- 6: Düse
- 7: Absaugvorrichtung
- 7a: Absaugvorrichtung
- 8: Bürste
- 9: Rotationsrichtung
- 10: Umlaufrichtung
- 11: Balken
- 12: Strahlenquelle
- 12a: Strahlenquelle
- 12b: Strahlenquelle
- 13: gelöste Teile der Schicht
- 14: Abstreifkante
- 15: Bürste
- 16: Reinigungsmittel
- 16a: Reinigungsmittel
- 17: Auftragsvorrichtung
- 17a: Auftragsvorrichtung
- 18: Abstreifer
- 18a: Abstreifer
- 19a: Absaugvorrichtung
- 20: Bandtransport
- S10: Verfahrensschritt
- S12: Verfahrensschritt
- S14: Verfahrensschritt
- S15: Verfahrensschritt
- S16: Verfahrensschritt
- S18: Verfahrensschritt
- S20: Verfahrensschritt

## Patentansprüche

1. Verfahren zum Entfernen von Teilen einer Schicht (2) auf einer Oberfläche eines Werkstückes (1) mit den folgenden Schritten:
- Erzeugung eines Fluidstromes, bevorzugt in einem Winkel zwischen 1° und 90° zur Schicht (2), zum Entfernen von Teilen (13) der Schicht (2) und/oder einem Manipulationsmittel;
- physikalisches Trennen von entfernten Teilen (13) der Schicht (2) von den auf der Oberfläche des Werkstückes (1) verbleibenden Teilen der Schicht (2).

2. Verfahren nach Anspruch 1 mit folgendem Schritt:
- Herstellung eines mechanischen Kontaktes zwischen einem Kontaktelement und der Schicht (2) auf der Oberfläche zum Entfernen von Teilen (13) der Schicht (2) und/oder dem Manipulationsmittel.

3. Verfahren nach einem der vorangegangenen Ansprüche, wobei
die Schicht (2) auf der Oberfläche des Werkstückes (1) Härteunterschiede von mindestens einem Faktor 1,5, vorzugsweise mindestens einem Faktor 2, zwischen härteren Bereichen (2a) und weniger harten Bereichen (2b) aufweist.

4. Verfahren nach einem der oben stehenden Ansprüche, wobei
das physikalische Trennen von den abgelösten Teilen (13) der Schicht (2) von den auf der Oberfläche des Werkstückes (1) verbleibenden Teilen der Schicht (2) durch Absaugen, Abwischen, Abblasen, oder durch eine Kombination dieser Schritte erfolgt.

5. Verfahren nach einem der oben genannten Ansprüche 2 bis 4, wobei
das Kontaktelement eine stehende und/oder bewegte Bürste (8, 15) und/oder ein Schleif- und/oder ein Hobelelement aufweist, wobei vorzugsweise die Bürste (8) zumindest als bewegte Bürste (8) eine Tellerbürste und/oder eine Walzenbürste und/oder ein Bürstenband und/oder als stehende Bürste (8) einen Balken (11) mit Bürstenbesatz aufweist, und/oder wobei
das Kontaktelement, insbesondere die Bürste (8, 15), Textil- und/oder Kunststofffasern, insbesondere Nylonfasern, Anderlon, und/oder Metall, insbesondere Stahl, Messing oder Kupfer als Borsten aufweist.

6. Verfahren nach einem der vorangegangenen Ansprüche, wobei
gleichzeitig mit dem Herstellen des mechanischen Kontaktes zwischen dem Kontaktelement und der Schicht (2) auf der Oberfläche und/oder gleichzeitig mit der Erzeugung des Fluidstromes auf die Schicht (2) eine Bestrahlung der Schicht (2) und/oder des Kontaktelementes und/oder der Umgebung des Kontaktelementes in der sich getrennte Teile der Schicht (2) befinden, vorzugsweise mit elektromagnetischer Strahlung, erfolgt.

7. Verfahren nach einem der Ansprüche 2 bis 6, wobei
das Kontaktelement (8, 15) während des physikalischen Trennens kontinuierlich gereinigt wird, wobei die Reinigung vorzugsweise durch Verwendung einer Kombination aus einer elektromagnetischen Strahlenquelle (5, 12) und/oder einer Absaugvorrichtung (7, 7a) und/oder einer mechanischen Abschlagkante (14) durchgeführt wird.

8. Verfahren nach einem der vorstehenden Ansprüche, wobei
eine Düse (6), die zur Erzeugung des Fluidstroms ausgebildet ist, während des physikalischen Trennens kontinuierlich gereinigt wird, wobei die Reinigung vorzugsweise durch eine Kombination aus einer elektromagnetischen Strahlenquelle (5, 12) und/oder einer Absaugvorrichtung (7, 7a) und/oder einer oder mehrere weitere Trocknungseinrichtungen oder Strahlenquellen (5, 12) durchgeführt wird.

9. Verfahren nach einem der Ansprüche 7 oder 8, wobei
die kontinuierliche Reinigung des Kontaktelementes, insbesondere der Bürste (8), durch eine Bestrahlung mit UV-Strahlung, bevorzugt mit einer Wellenlänge zwischen 180 und 400 nm, in Kombination mit einem Abstreifen von ausgehärteten Restbestandteilen (13) aus den abgetrennten Teilen der Schicht (2) an einer Abschlagkante (14) und einer Absaugvorrichtung dieser Restbestandteile (13) mit Hilfe einer Absaugvorrichtung (7, 7a) erfolgt.

10. Verfahren nach einem der Ansprüche 8 oder 9, wobei
die kontinuierliche Reinigung der Düse (6) durch eine Bestrahlung mit UV-Strahlung, bevorzugt mit einer Wellenlänge zwischen 180 und 400 nm, in Kombination mit einem Absaugen von Restbestandteilen (13) aus den abgetrennten Teilen der Schicht (2) mit Hilfe einer Absaugvorrichtung (7, 7a) erfolgt.

11. Verfahren nach einem der vorstehenden Ansprüche, wobei
eine Absaugvorrichtung (7) mit einer Strahlenquelle (12) verwendet wird, die dazu ausgebildet ist, elektromagnetische Strahlung zur Aushärtung der aufgesaugten Teile (13) der Schicht (2) und/oder des Manipulationsmittels abzugeben, wodurch innerhalb der Absaugvorrichtung (7) eine Härtung der Teile (13) erfolgt.

12. Verfahren nach einem der Ansprüche 2 bis 11, wobei
das Kontaktelement während des Entfernens des Manipulationsmittels und/oder von Teilen der Schicht (2) bestrahlt wird, wodurch Material, das sich an dem Kontaktelement festgesetzt hat, mindestens teilweise oder vollständig ausgehärtet wird und dann in einer harten und spröden Form vorliegt.

13. Vorrichtung zur Durchführung des Verfahrens nach einem der Ansprüche 1 bis 12, aufweisend:
- eine Transportvorrichtung, die dazu ausgebildet ist, ein Werkstück (1) zu weiteren Elementen der Vorrichtung zu transportieren, und/oder zumindest ein weiteres Element der Vorrichtung zu dem Werkstück (1) zu bewegen;
- als weiteres Element eine Entfernungsvorrichtung, die dazu ausgebildet ist, Teile (13) von der Schicht (2) und/oder ein Manipulationsmittel fluidisch, bevorzugt mit einem Fluidstrom aus einer Düse (6), zu entfernen, wobei
die Vorrichtung ferner ein Steuermittel umfasst, das dazu ausgebildet ist, die Transportvorrichtung und die weiteren Elemente der Vorrichtung anzusteuern, um das Verfahren nach einem der Ansprüche 1 bis 12 durchzuführen.

14. Vorrichtung nach Anspruch 13, wobei
die Vorrichtung eine Absaugvorrichtung (7) mit einer Strahlenquelle (12) aufweist, die dazu ausgebildet ist, elektromagnetische Strahlung zur Aushärtung der aufgesaugten Teile (13) der Schicht (2) und/oder des Manipulationsmittels abzugeben, wodurch innerhalb der Absaugvorrichtung (7) eine Härtung der Teile (13) erfolgt.

15. Vorrichtung nach Anspruch 13 oder 14, wobei
die Entfernungsvorrichtung dazu ausgebildet ist, Teile (13) von der Schicht (2) und/oder ein Manipulationsmittel mechanisch mit einem Kontaktelement zu entfernen, wobei
die Vorrichtung dazu ausgebildet ist, das Kontaktelement während des Entfernens des Manipulationsmittels und/oder von Teilen der Schicht (2) zu bestrahlen, wodurch Material, das sich an dem Kontaktelement festgesetzt hat, mindestens teilweise oder vollständig ausgehärtet wird und dann in einer harten und spröden Form vorliegt.
